(19) Europäisches Patentamt
European Patent Office
Office européen des brevets

(11) EP 4 765 690 A1

(12) EUROPÄISCHE PATENTANMELDUNG

(43) Veröffentlichungstag:
**24.06.2026 Patentblatt 2026/26**

(21) Anmeldenummer: **24221620.8**

(22) Anmeldetag: **19.12.2024**

(51) Internationale Patentklassifikation (IPC):
***H04J 3/06*** *(2006.01)* ***H04Q 9/04*** *(2006.01)*
***H04W 56/00*** *(2009.01)* *H04W 4/70 (2018.01)*

(52) Gemeinsame Patentklassifikation (CPC):
**H04J 3/0667; H04Q 9/04; H04W 56/00;**
H04L 67/12; H04Q 2209/845; H04W 4/38

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
- **Kussyk, Jaroslaw**
  **1170 Wien (AT)**
- **Brandstetter, Josef**
  **1210 Wien (AT)**

(74) Vertreter: **Siemens Patent Attorneys**
**Postfach 22 16 34**
**80506 München (DE)**

# (54) VERFAHREN UND SYSTEM ZUR ZEITSYNCHRONISATION VON SENSOREINHEITEN

(57) Verfahren zur Zeitsynchronisation von Sensoreinheiten (SU) in einem verteilten System, wobei von den Sensoreinheiten (SU) Sensordaten (SD) erfasst und über ein Funknetz (RFN) an eine Zentraleinheit (CU) übermittelt werden, und dass bei Erfassen von Sensordaten (SD) ein weiterer, aktueller Wert der internen Zeiteinheit (FC) der jeweiligen Sensoreinheit (SU) gespeichert wird, dass den erfassten Sensordaten (SD) zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordaten (SD) gespeicherte Wert der internen Zeiteinheit (FC) zugeordnet werden und gemeinsam mit den Sensordaten (SD) an die Zentraleinheit (CU) übertragen werden, und wobei die Zentraleinheit (CU) Spannungs- und Phasenwerte von zumindest einer der drei Phasenleiter eines Energieversorgungsnetzes als Stromzeiger über mehr als eine Messperiode (p) erfasst, und die Stromzeiger der jeweiligen Sensoreinheit (SU) zu aggregierten Stromzeigern ($\underline{I}_{H1p}$) aggregiert werden, und die aggregierten Stromzeiger ($\underline{I}_{H1p}$) an die Zentraleinheit (CU) übertragen werden, und in der Zentraleinheit (CU) aus den Spannungswerten und den aggregierten Stromzeigern ($\underline{I}_{H1p}$) phasenrichtig Leistungen berechnet werden.

FIG 2

U2
y
I2, U1
φ2
I1, U1
φ1
U1=Uref
α1=0
x
φ3
U3
I3, U1



Processed by Luminess, 75001 PARIS (FR)

## Beschreibung

Die Erfindung betrifft ein Verfahren und ein System zur Zeitsynchronisation von Sensoreinheiten in einem verteilten System.

In elektrischen Energieverteilinfrastruktur, wie beispielsweise in intelligenten Gleich- und Wechselstromverteilnetzen, sog. "Smart-Grids", wird die Information über einen Netzzustand, wie beispielsweise das Spannungsniveau, die Strombelastung, den Leistungsfluss und die Lastverteilung, etc. durch viele verteilte Sensordaten erfasst und bestimmt.

Zur Überwachung und Steuerung der Netze werden üblicherweise die Sensordaten übermittelt und zentral ausgewertet.

Abhängig von der Art des Sensors und der Art der zentralen Auswertung der Sensordaten sind der Sensorwert und der Erfassungszeitpunkt für die Auswertung wichtig, um zum Beispiel eine Berechnung von Wirk- und Blindleistung auf Basis von Spannungs- und Strommesswerten zu ermöglichen, welche von unterschiedlichen Sensoren übermittelt werden können, die auch örtlich verteilt sein können.

Insbesondere für die Bestimmung der Wirk- und Blindleistung beziehungsweise der komplexen Scheinleistung ist der genaue Zeitpunkt der Messwerterfassung und insbesondere deren Bezug zueinander essenziell.

Im Stand der Technik wurde die zeitliche Synchronisation durch leitungsgebundene Kommunikationsverbindungen zwischen den Sensoren und der Auswerteeinheit gelöst oder der Spannungsmesswert wurde als analoges Messwertsignal den einzelnes Strommesssensoren über eine drahtgebundene Verbindung zugeführt.

Als drahtlose Alternativlösung ist die Verwendung bei jedem Sensor einer zusätzlichen Zeitsynchronisationsquelle bekannt, die über eine Funkverbindung zur Verfügung steht, beispielsweise einer GPS-Uhr, eines Funk-Zeitnormalsender (wie der Langwellensender DCF77) oder eines zentralen NTP-Referenzzeit-Servers ("Network Time Protocol", kurz NTP).

Der Nachteil von drahtgebundenen Kommunikationslösungen ist, dass eine Datenleitung erforderlich ist, was zu einem erhöhten Installationsaufwand und geringerer Akzeptanz der Anwender führen könnte und dies insbesondere bei der Nachrüstung der Sensoren ein relevanter Kostenfaktor und Systemkomplexitätsfaktor sein kann.

Der Nachteil von Zeitsynchronisationsquellen über Funk ist die Einschränkung bei der Einbauposition der Antenne.

So ist beispielsweise ein Empfang von GPS-/DCF77-/Mobilfunkzeitsignalen in geschlossenen Räumen sehr schwer bis nicht möglich.

Außerdem sind DCF77 oder vergleichbare Zeitinformationsdienste nicht ausreichend genau und nur regional beschränkt verfügbar.

Außerdem verursachen solche Lösungen eine unerwünschte Systemkomplexität, nachteilige Einbauvorschriften und führen ferner zu erhöhten Kosten durch einen zusätzlichen Funkempfänger und die dazugehörige Antenne.

In der Publikation EP3993290B1 ist ein Verfahren für eine Zeitsynchronisation von Sensoreinheiten eines verteilten Systems angegeben, durch welches eine zeitliche Relation zwischen den erfassten Sensordaten der Sensoreinheiten des verteilten Systems hergestellt werden kann, jedoch internen Signal-Laufzeiten nicht entsprechend bei der Signal-Erfassung berücksichtigt werden, wodurch die Genauigkeit bei der Bestimmung einer Leistungsaufnahme in einem Energieverteilungsnetz ungünstig beeinträchtigt wird.

Eine weitere Problematik liegt im Stand der Technik vor, wenn Sensoren die erfassten Strombeziehungsweise Spannungsdaten über ein geteiltes Medium, wie ein Funknetzwerk mit eingeschränkter Übertragungskapazität wie Bluetooth, Bluetooth Low Energy (kurz BLE), ZigBee oder Ähnliches übermitteln sollen.

Dabei kann das Problem entstehen, dass die einzelnen Strom- beziehungsweise Spannungs-Abtastwerte insbesondere von mehreren Dutzenden solcher Sensoren insgesamt eine zu hohe Datenmenge für das Übertragungsmedium ergeben.

In Stand der Technik wurde das Problem einer großen Messdatenmenge so gelöst, dass für eine bestimmte Messperiode in verteilten Sensoren Strom- und/oder Spannungseffektivwerte gebildet und in eine Auswerteeinheit übertragen wurden, statt deren einzelne Abtastwerte zu übertragen.

Der Nachteil dieser Methode bei einer örtlich verteilten separaten Bildung von Wechselstrom- und/oder Wechselspannungseffektivwerten besteht darin, dass dabei die Information über die Phasenlage vom Wechselstrom in einem Leiter in Bezug auf die zugehörige Wechselspannung verloren geht, wodurch die Berechnung von Wirk- und Blindleistung nicht möglich, die jedoch essenziell wäre, um einen Lastfluss in einem Wechselstromverteilnetz zu überwachen.

Es ist daher Aufgabe der Erfindung eine einfachere, effiziente, genaue und zuverlässige Lösung zur Datenübertragung von Sensordaten von verteilten Sensoren bereitzustellen.

Die erfindungsgemäße Aufgabe wird durch ein Verfahren zur Zeitsynchronisation von Sensoreinheiten in einem verteilten System, wobei die Sensoreinheiten jeweils eine interne Zeiteinheit aufweisen, und wobei von den Sensoreinheiten Sensordaten erfasst und über ein Funknetz an eine Zentraleinheit übermittelt werden, und wobei im Funknetz in regelmäßigen, zeitlichen Abständen ein Kennsignal ausgesendet wird, dass ein Empfang des Kennsignals in einer jeweiligen Sensoreinheit überwacht wird, dass bei Empfang eines charakteristischen Zeitmerkmal des Kennsignals jeweils ein aktueller Wert der internen Zeiteinheit der jeweiligen Sensoreinheit mit zumindest einer im Kennsignal enthaltene Senderidentifikation gespeichert wird, dass bei Erfassen von Sensordaten ein weiterer, aktueller Wert der internen Zeiteinheit der jeweiligen Sensoreinheit gespeichert wird, dass den erfassten Sensordaten zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordatengespeicherte Wert der internen Zeiteinheit zugeordnet werden und gemeinsam mit den Sensordaten an die Zentraleinheit übertragen werden, und dass anhand der Senderidentifikation eine Bezugszeitbasis und anhand des bei Empfang des charakteristischen Zeitmerkmals des Kennsignals gespeicherten Werts der internen Zeiteinheit der jeweiligen Sensoreinheit und des beim Erfassen der Sensordaten weiteren, gespeicherte Werts der internen Zeiteinheit der jeweiligen Sensoreinheit eine zeitliche Relation der übertragenen Sensordaten der jeweiligen Sensoreinheit zur Bezugszeitbasis abgeleitet werden, wobei die Zentraleinheit Spannungs- und Phasenwerte von zumindest einem der drei Phasenleiter eines Energieversorgungsnetzes als Spannungszeiger über mehr als eine Grundschwingungs-Periode der Spannung erfasst, und die Sensordaten als Stromzeiger der jeweiligen Sensoreinheit zu aggregierten Stromzeigern aggregiert werden, und die aggregierten Stromzeiger statt der Sensordaten an die Zentraleinheit übertragen werden, und in der Zentraleinheit aus den Spannungswerten und den aggregierten Stromzeigern phasenrichtig Leistungen berechnet werden.

Dadurch kann auf vorteilhafte Weise erreicht werden, dass die Stromzeiger in ihren komplexen Werten zusammengeführt werden und eine Datenreduktion im Übertragungskanal von der Sensoreinheit zur Zentraleinheit erfolgt.

Somit kann die Datenmenge der Übertragung von der jeweiligen Sensoreinheit an die Zentraleinheit reduziert werden und der Übertragungskanal entsprechend effizient genutzt werden.

Eine Aggregation von Wechselstromzeiger beziehungsweise Wechselspannungszeiger erlaubt eine drastische Reduktion der Menge von Messdaten, welche in einem verteilten Messystem von mehreren Sensoreinheiten zu einer Zentraleinheit übertragen werden sollen.

Trotzdem ist dabei eine ausreichend genaue Berechnung von Wirk- und Blindleistungsmittelwerten zur Lastflussüberwachung in elektrischen Wechselstromverteilnetzen möglich.

Dadurch ist es möglich, energiesparsame drahtlose Kommunikationstechnologien einzusetzen, was besonders bei Lösungen mit lokaler Energierückgewinnung aus den Strömen in einzelnen Phasenleitern von großem Vorteil ist.

Nach dem Empfang eines komplexen Wechselstromzeiger oder des aggregierten Werts, unter der Berücksichtigung dessen Zuordnung zu der entsprechenden Phasenspannung, kann der komplexe Wechselstromzeiger oder der aggregierte Wert entweder direkt übernommen oder um $\pm 120°$ gedreht, bevor er mit dem Betrag der zugehörigen, das heißt der entsprechenden Phasenspannung multipliziert wird, um phasenrichtig die Wirk- und Blindleistung zu berechnen.

Unter einem aggregierten Wert wird eine Abbildung von mehreren Messwerten zu einem einzigen Wert verstanden, wie beispielsweise durch Mittelwertbildung, insbesondere Mittelwertbildung aus mehreren Strom- und/oder Spannungszeigern, aus welchen durch die Mittelung aggregierte Strom- bzw. Spannungszeiger gebildet werden.

Unter dem phasenrichtigen Berechnen von Leistungen wird verstanden, dass Spannungen und Ströme aus mehreren Phasenleitungen vor einer Multiplikation in die entsprechende Phasenlage gebracht werden, also entsprechend um einen Winkel von $\pm 120°$ in die entsprechende Richtung gedreht beziehungsweise transformiert werden.

Es ist klar, dass in der Zentraleinheit aus den Spannungswerten beziehungsweise deren (aggregierten) Spannungszeigerwerten und den aggregierten Stromzeigern die Leistungen berechnet werden.

Somit kann das phasenrichtige Berechnen von Leistungen als Leistungsberechnung unter der Berücksichtigung einer Transformation der einzelnen Phasen der (aggregierten) Stromzeiger in Bezug auf die Phasenlage einer gewählten Referenzspannung bezeichnet werden.

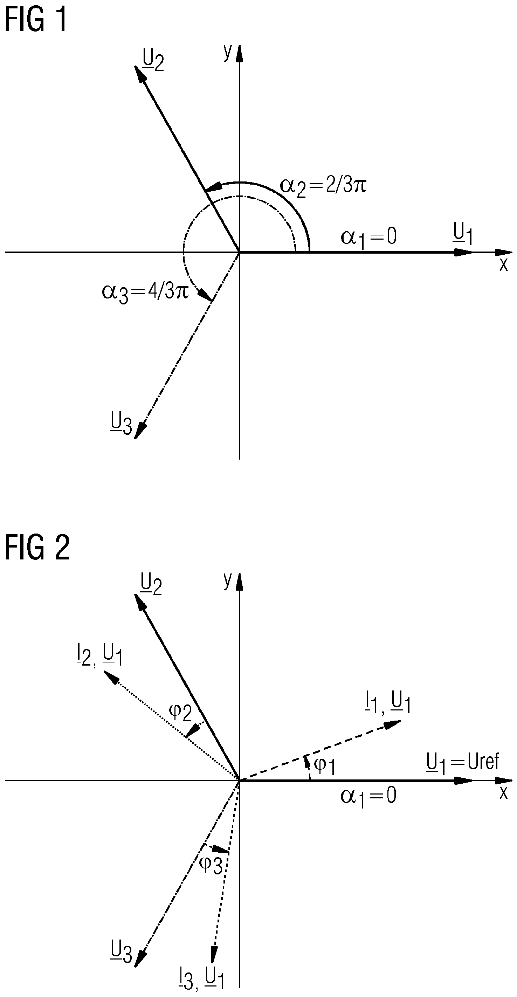

Mit anderen Worten müssen die Spannungen und Ströme aus mehreren Phasenleitungen in eine Phasenlage gebracht werden, um denselben Bezug wie die zugehörigen Spannungszeiger zu der X-Achse eines 2-dimensionalen kartesischen Koordinatensystems zu haben, in welchem die zugehörigen komplexwertigen Strom- und Spannungszeiger dargestellt werden, wie in den Figuren 1, 2 und 3 grafisch dargestellt.

Die Transformation kann auf zwei verschiedene Varianten erfolgen:

a) Es wird ein Spannungszeiger als Referenzspannung festgelegt, welcher ein Koordinatensystem für aller Spannungs- und Stromzeiger bestimmt, gemeinsam sowohl in der Zentraleinheit als auch in der Sensoreinheit durch die Synchronisierung.
In diesem Fall entsprechen Richtung und Orientierung des Referenz-Spannungszeigers der X-Achse eines kartesischen Koordinatensystems, und sowohl Spannungszeiger als auch Stromzeiger sind auf dasselbe Koordinatensystem bezogen, welches durch den aktuellen Referenzspannungszeiger bestimmt wird, und müssen daher nicht gedreht werden.
Wenn ein neuer Referenzspannungszeiger festgelegt wird, wird Richtung und Orientierung der X-Achse und Y-Achse eines kartesischen Koordinatensystems entsprechend geändert, also gedreht.
In dem Fall beziehen sich sowohl Spannungszeiger als auch Stromzeiger wieder dasselbe Koordinatensystem, und müssen daher nicht gedreht werden.
Allerdings sind sowohl Spannungszeiger als auch Stromzeiger als komplexe Werte im vorigen und im gedrehten Koordinatensystem unterschiedlich dargestellt, und können unterschiedliche komplexe Werte aufweisen).
b) Jeder der drei Spannungszeiger - vorzugsweise Phasenspannungszeiger - bildet sein eigenes Koordinatensystem, und es müssen nur jene Stromzeiger um +/-120° gedreht werden, welche zu den jeweiligen Spannungszeigern gehören, welche aktuell nicht der Referenzspannungszeiger sind beziehungsweise von dem Referenzspannungszeiger entsprechend um +/-120° gedreht sind.

Die Drehung des Wechselstromzeiger als Vektors, welcher im kartesischen Koordinatensystem durch dessen komplexen Wert bestimmt ist, kann beispielsweise mittels Multiplikation mit einer sogenannten Rotationsmatrix erfolgen.

Die aggregierten Wechselstromzeiger können demnach von der Sensoreinheit an die Zentraleinheit mithilfe einer Funkverbindung übermittelt werden, neben Zeitstempeln der Sensoreinheit, den jeweiligen Nummern der ersten Grundschwingungs-Periode der Referenzspannung in der Messperiode, und optional den Nummern der aktuellen Messperiode p und/oder den vorhergehenden Messperioden p-1, p-2.

Nach dem Empfang dieser Daten können in der Zentraleinheit die zugehörigen, synchron erfassten komplexen aggregierten Wechselstromzeiger um einen jeweiligen Winkel von 120° in die entsprechende Richtung rotiert werden, um einen korrekten phasenmäßigen Bezug entweder auf die entsprechende Phasenspannung oder auf die Referenzspannung für diese Sensoreinheit zu erhalten.

Dann kann der gedrehte aggregierte Wechselstromzeiger mit dem Betrag des (aggregierten) Effektivwerts der Phasenspannung multipliziert werden, um Mittelwerte für die Wirk- und Blindleistung zu erhalten, was der zuvor genannten Variante b) entspricht.

Alternativ wäre es auch möglich den komplexen aggregierten Wechselstromzeiger zu konjugieren und mit dem dazugehörigen komplexen, aggregierten Wechselspannungszeiger zu multiplizieren, um die Mittelwerte für Wirk- und Blindleistung zu erhalten, was der zuvor genannten Variante a) entspricht.

Um die Menge der zu übertragenen Messdaten also zu reduzieren, können die Stromzeiger als komplexe Werte über die Messperiode gemittelt und als aggregierter komplexer Wechselstromzeiger gespeichert werden.

In einer Weiterbildung der Erfindung ist es vorgesehen, dass das Aggregieren der Stromzeiger unter Berücksichtigung deren jeweiligen Beträge unter Einbeziehung der Phasenwerte durch Mittelung innerhalb der Messperiode erfolgt, beispielsweise durch separate Mittelung der Real- und Imaginärteile der komplexen Werte der Stromzeiger.

Dadurch wird auf einfache Weise eine Aggregation erreicht, welche mit einer geringen Berechnungskomplexität bei der Sensoreinheit durchgeführt werden kann.

In einer Weiterbildung der Erfindung ist es vorgesehen, dass das Aggregieren der Stromzeiger unter Berücksichtigung der jeweiligen internen Zeiteinheit der jeweiligen Sensoreinheit durch Mittelung über die Messperioden erfolgt.

Dadurch wird auf einfache Weise eine alternative Aggregation erreicht, welche mit einer geringen Berechnungskomplexität durch die Sensoreinheit durchgeführt werden kann.

In einer Weiterbildung der Erfindung ist es vorgesehen, dass das Aggregieren der Stromzeiger nur jene der Perioden berücksichtigt, bei welchen die Werte für die Stromzeiger innerhalb von vordefinierten Grenzwerten liegen.

Dadurch kann die Genauigkeit und Zuverlässigkeit der Messwerte, welche bei der nachfolgenden Leistungsberechnung herangezogen werden, verbessert werden.

Während der Aggregation über die Messperiode werden nur also die validen gemessenen Stromzeiger verwendet.

Jene Stromzeiger, welche beispielsweise durch ein Aufgetreten von Störimpulsen oder Energierückgewinnungsphasen verfälscht sind, werden in die Aggregation innerhalb der Messperiode nicht aufgenommen.

In dem Fall verringert sich die effektive Dauer für die Aggregation innerhalb der Messperiode, beziehungsweise die für die Aggregation verwendeten validen Stromzeiger bilden eine fragmentierte Menge.

Zeitabschnitte, in welchen die Ströme durch eine Energierückgewinnung in einer Sensoreinheit gestört sind, können von einer Stromversorgungseinheit innerhalb der Sensoreinheit signalisiert werden und aus der Aggregation ausgenommen werden, was zu einer weiteren Fragmentierung der Aggregation führen kann.

In einer Weiterbildung der Erfindung ist es vorgesehen, dass die aggregierten Stromzeiger von der jeweiligen Sensoreinheit zur Zentraleinheit übertragen werden.

In einer Weiterbildung der Erfindung ist es vorgesehen, dass die Stromzeiger über mehr als eine Grundschwingungs-Periode der Referenz-(Phasen) Spannung, also über mehr als eine Spannungsperiode einer der drei Phasen des Energieversorgungsnetzes ermittelt werden, bevorzugt aus zumindest zehn Perioden, besonders bevorzugt aus zumindest 100 Perioden.

Dadurch wird auf einfache Weise eine effiziente Aggregation erreicht, welche mit einer geringen Berechnungskomplexität durch die Sensoreinheit durchgeführt werden kann.

In einer Weiterbildung der Erfindung ist es vorgesehen, dass die Zentraleinheit Spannungs- und Phasenwerte von zumindest einem der drei Phasenleiter eines Energieversorgungsnetzes erfasst, aus welchen Synchronisierungs-Daten zur Frequenz oder Periodendauer, sowie zur Phasenlage der Spannung zumindest eines der drei Phasenleiter in Bezug auf den Erfassungszeitpunkt der Spannungs- und Phasenwerte des zumindest einen der drei Phasenleiter ermittelt und an die Sensoreinheiten übermittelt werden, und die jeweilige Sensoreinheit die jeweiligen Sensordaten in Form von Stromwerten in Bezug auf die Synchronisierungs-Daten erfasst, wobei die Sensordaten an die Zentraleinheit übertragen werden, und in der Zentraleinheit aus den Spannungswerten und Stromwerten Leistungen berechnet werden.

Dadurch wird eine synchrone Leistungsmessung mithilfe funkbasierter Strommess-Sensoren und einer gemeinsamen zentralen Spannungserfassungs-Einheit ermöglicht, was eine flexible und effiziente nachträgliche Installation und Erweiterung von Geräten zu Überwachung elektrischer Energieverteilnetze ohne einen erhöhten Verkabelungsaufwand erlaubt.

Die synchrone Messung der Leistung des Verbraucher-Systems erlaubt eine besonders präzise Messung auf einfache Weise.

Es ist klar, dass die Berechnung von Leistungen in der Zentraleinheit aus den Spannungswerten und Stromwerten unter Einbeziehung deren jeweiliger Phasenlage erfolgt.

Dies wird erreicht, indem die Spannungen im Energieversorgungsnetz nur an einer Stelle gemessen werden und die Ströme an mehreren verteilten Stellen erfasst werden.

Dies ist in der Praxis weniger aufwändig, als an verteilten Orten zusätzlich Spannungen zu erfassen, da ein höherer Absicherungsaufwand erforderlich wäre und darüber hinaus die Überspannungsproblematik zusätzlich gelöst werden müsste.

Zudem sind bei der genannten dezentralen Wirk- und Blindleistungsmessung keine zusätzliche Synchronisierungsquelle und keine zusätzliche Verkabelung notwendig.

Die Synchronisierung kann beispielsweise so erfolgen, indem eine Zeitbasis eines führenden Zeitgebers innerhalb der Zentraleinheit mit einer entsprechend folgenden Zeitbasis der jeweiligen Sensoreinheit abgestimmt wird.

Der durch die Sensoreinheit fließende Strom kann außerdem zu deren Energie-Versorgung verwendet werden, was eine besonders einfache nachträgliche und wartungsarme Integration in ein bestehendes System erlaubt.

Unter dem Kennsignal kann beispielsweise ein Synchronisierungs-Rahmen einer Nachricht, insbesondere eine Nachricht an mehrere Empfänger ("multicast") angewendet werden.

In zumindest einer oder allen Sensoreinheiten werden in der aktuellen Messperiode anhand der übermittelten Werte für den Null-Punktdurchgang und der Periodendauer, und des optionalen Werts für den Null-Punktdurchgang der vorhergehenden Periode synchron Null-Punkt-Durchgangszeitpunkte der Referenzspannung in der Zentraleinheit bestimmt und auf der Basis der Wechselstromwerte zunächst Stromzeiger für jede einzelne Spannungs-Grundschwingungsperiode innerhalb der aktuellen Messperiode gebildet.

In einer Weiterbildung der Erfindung ist es vorgesehen, dass die Synchronisierungs-Daten betreffend die Phasenlage der Spannung zumindest eines der drei Phasenleiter in Bezug auf den Erfassungszeitpunkt der Spannungs- und Phasenwerte des zumindest einen der drei Phasenleiter durch den Zeitpunkt der Übermittlung von der Zentraleinheit an die jeweilige Sensoreinheit gebildet sind.

Dadurch können auf besonders einfache Weise Synchronisationsdaten für eine Kompensation der Verzögerung ermittelt und übertragen werden.

In einer Weiterbildung der Erfindung ist es vorgesehen, dass die Synchronisierungs-Daten mithilfe des Kennsignals an die Sensoreinheiten übermittelt werden.

Dadurch können auf besonders einfache Weise die Synchronisationsdaten für eine Kompensation der Verzögerung übertragen beziehungsweise kann eine Justierung der Zeitbasis in der Sensoreinheit durchgeführt werden.

In einer Weiterbildung der Erfindung ist es vorgesehen, dass die Synchronisierungs-Daten über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

Dadurch wird erreicht, dass der Funkkanal weniger belastet wird, weniger Daten übertragen werden und dennoch eine hinreichende Genauigkeit bei der Leistungsmessung im Energieversorgungsnetz erhalten wird.

In einer Weiterbildung der Erfindung ist es vorgesehen, dass die Zentraleinheit Spannungs- und Phasenwerte von einem Phasenleiter des Energieversorgungsnetzes und erste ergänzende Synchronisierungs-Daten zur Zeit-Verzögerung bei der Aussendung des Kennsignals erfasst, welche in einem vorhergehenden Zeitraum erfasst wurde, welche vor dem aktuellen Zeitraum liegt, in welchem die Synchronisierungs-Daten erfasst werden, und die ersten ergänzenden Synchronisierungs-Daten an die jeweilige Sensoreinheit übermittelt werden, bevorzugt mithilfe des Kennsignals, und die ersten ergänzenden Synchronisierungs-Daten bei der Erfassung der jeweiligen Sensordaten durch die jeweilige Sensoreinheit berücksichtigt werden.

Dadurch kann die Messgenauigkeit auf einfache Weise verbessert werden.

Außerdem können auf besonders einfache Weise Synchronisationsdaten für eine Kompensation der Verzögerung ermittelt und übertragen werden.

Die ersten ergänzenden Synchronisierungs-Daten sind der Wert der Zeit-Verzögerung im vorhergehenden Messzyklus.

Zunächst werden die Synchronisierungsdaten in Form des Nullpunkt-Durchgangs-Zeitpunkts in der zentralen Kontroll-Vorrichtung sowie die Periodendauer im Phasenleiter übertragen.

Erst anschließend wird am Anfang der nächsten, nachfolgenden Messperiode im Nachhinein die erfasste Verzögerung der Aussendung des Synchronisations-Rahmens übertragen.

Bei dem genannten Phasenleiter des Energieversorgungsnetzes handelt es sich um einen ausgewählten Referenzleiter der drei Phasenleitungen, welcher als Referenz für die Phasenlagen der weiteren Phasenleiter gilt.

In einer Weiterbildung der Erfindung ist es vorgesehen, dass die Zentraleinheit ferner eine interne zentrale Zeiteinheit aufweist, deren Wert zweite ergänzende Synchronisierungs-Daten bildet, und die zweiten ergänzenden Synchronisierungs-Daten an die jeweilige Sensoreinheit übermittelt werden, bevorzugt mithilfe des Kennsignals, und die zweiten ergänzenden Synchronisierungs-Daten bei der Erfassung der jeweiligen Sensordaten durch die jeweilige Sensoreinheit berücksichtigt werden.

Dadurch kann die Messgenauigkeit auf einfache Weise verbessert werden.

Außerdem können auf besonders einfache Weise Synchronisationsdaten für eine Kompensation der Verzögerung ermittelt und übertragen werden.

Die erfindungsgemäße Aufgabe wird auch durch ein verteiltes System zur Zeitsynchronisation von Sensoreinheiten gelöst, umfassend ferner eine Zentraleinheit, wobei das System dazu eingerichtet ist, das erfindungsgemäße Verfahren auszuführen.

In den nachfolgenden Figuren wird die Erfindung anhand von Ausführungsbeispielen näher erläutert. Die Figuren zeigen in

Fig. 1-3 Beispiele für die Anpassung der Phasenlage von Spannungs- oder Stromzeigern auf eine Referenzphasenleitung mit deren Referenzspannung.

Fig. 4 ein Beispiel für ein Energieverteilungsnetz,

Fig. 5 ein erstes Ausführungsbeispiel der Erfindung in Form eines Blockschaltbildes,

Fig. 6 ein zweites Ausführungsbeispiel der Erfindung in Form eines Blockschaltbildes,

Fig. 7 ein drittes Ausführungsbeispiel der Erfindung in Form eines Blockschaltbildes,

Fig. 8 eine Detailansicht der Zentral-Einheit der Erfindung,

Fig. 9 ein Beispiel für einen Signalverlauf im Energieverteilungsnetz.

**Fig. 1** zeigt ein Beispiel für Spannungszeiger eines Energieverteilungsnetzes mit einer Phasenlage von 120° zueinander.

**Fig. 2** zeigt ein Beispiel für Spannungszeiger und Stromzeiger eines Energieverteilungsnetzes.

Die Spannungszeiger weisen eine Phasenlage von 120° ( $^2/_{3\pi}$ ) zueinander auf, wobei der erste Spannungszeiger $\underline{U}_1$ als Referenzspannung $U_{REF}$ ausgewählt wird, welche in der X-Achse des Diagramms liegt.

Die Stromzeiger weisen eine Phasenlage $\varphi_1$, $\varphi_2$, $\varphi_3$ zu den jeweiligen zugeordneten Spannungszeigern auf, was durch unterschiedliche Lasten an den Phasenleitungen hervorgerufen wird.

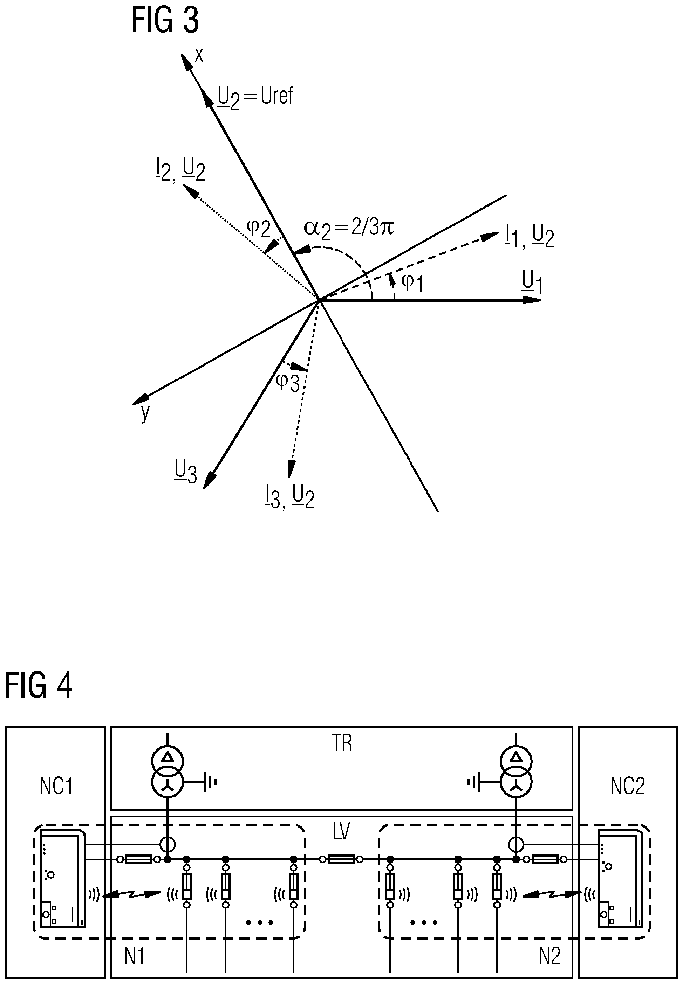

**Fig. 3** zeigt ein Beispiel für Spannungszeiger und Stromzeiger eines Energieverteilungsnetzes.

Die Spannungszeiger weisen wiederum eine Phasenlage von 120° zueinander auf, wobei der zweite Spannungszeiger $\underline{U}_2$ als Referenzspannung $U_{REF}$ ausgewählt wird, welche nicht in der X-Achse des Diagramms liegt.

**Fig. 4** zeigt ein Beispiel für ein Energieverteilungsnetz in Form eines "Einlinien"-Schaltbildes.

Die Linien repräsentieren dabei 3-, 4- oder 5-leiter-Verbindungen einzelner Abzweige im Niederspannungs- und Mittelspannungsbereich (übliche Bezeichnungen sind L1, L2, L3 oder L1, L2, L3, PEN/E oder L1, L2, L3, N und PE/E).

Eine Sensoreinheit und/oder eine Zentraleinheit können in jedem der angeführten Leiter als auch in den Mittelspannungsabzweigen/Bereich installiert werden.

In einer sogenannten Ortsnetzstation erfolgt die Umsetzung einer Hochspannung mithilfe eines oder mehrerer Transformatoren TR in einen Niederspannungs-Bereich LV.

Zentraleinheiten sind mit jeweilig zugeordneten Sensoreinheiten über jeweilige drahtlose Netzwerke N1, N2 verbunden, welche über entsprechend zugeordnete Netzwerk-Kontroll-Vorrichtungen NC1, NC2 gesteuert werden.

Eine Sensoreinheit dient zur Erfassung von Strömen in den Phasenleitern einzelner Abzweige zu Endverbrauchern.

In der Sensoreinheit, die als NH-Sicherungssätze oder beispielsweise in den Mittelspannungsleitungen/-abzweigen installiert sind, werden Stromzeiger, also komplexe Werte für die jeweiligen Ströme als Stromwerte beziehungsweise Sensordaten erfasst, wobei für die ermittelten Ströme optional ein Mittelwert gebildet wird und dieser übertragen wird.

Es können sogenannte zeitsynchronisierte Stromzeiger angewandt werden, welche zu einem bestimmten Zeitpunkt synchron mit Spannungszeigern erfasst werden.

Bei den Strömen können die Mittelwerte der Stromzeiger oder Strombeträge/-amplituden oder Stromeffektivwerte verwendet werden, da die Mittelwerte der Wechselströme häufig nahe Null sind.

In der Zentraleinheit werden Spannungszeiger, also komplexe Werte für die jeweiligen Spannungen als Spannungswerte erfasst, wobei für die ermittelten Spannungen optional ein Mittelwert gebildet wird.

Es können sogenannte zeitsynchronisierte Spannungszeiger angewandt werden, welche zu einem bestimmten Zeitpunkt synchron mit Stromzeigern erfasst werden.

Bei den Spannungen können die Mittelwerte der Spannungszeiger oder Spannungsbeträge/- amplituden oder Spannungseffektivwerte verwendet werden, da die Mittelwerte der Wechselspannungen häufig nahe Null sind.

In der Zentraleinheit werden die gemittelten Stromzeiger von einer oder mehreren Sensoreinheiten über eine Nahfunkkommunikation (wie beispielsweise "Zigbee" oder Bluetooth) empfangen.

Unter Einbeziehung der zugehörigen gemittelten Spannungszeiger wird in der Zentraleinheit die Wirk- und Blindleistung P und Q in den jeweiligen Phasenleitungen berechnet.

Unter Zeigern für Strom oder Spannung werden jeweilige komplexe Werte verstanden, also Betragswerte und Phasenwerte für den Strom oder die Spannung.

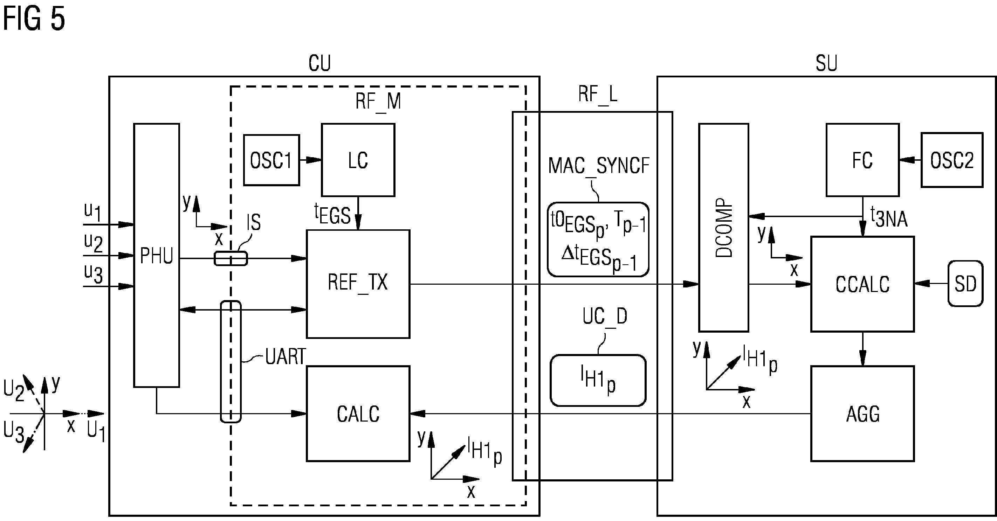

**Fig. 5** zeigt ein erstes Ausführungsbeispiel der Erfindung in Form eines Blockschaltbildes.

Eine Zentraleinheit CU umfasst eine Vorrichtung zur Referenz-Phasen-Übertragung PHU, welche dazu dient:

- Eine Erkennung eines Null-Durchgangs bei einem Spannungsverlauf,
- eine Berechnung von Spannungen mit Betrags- und Phasen-Informationen, also Spannungszeiger,
- ein Zählen von Messperioden p einer jeweiligen Referenzspannung $U_{REF_H1}$, ausgewählt aus den Netz-Spannungen u1, u2, u3, welche vorzugsweise Phasenspannungen sind,
- eine Bestimmung eines Referenz-Leiters LREF von Netzphasen-Leitern L1, L2, L3 eines Energieversorgungs-Netzes,
- eine Bestimmung einer Phasen-Abfolge von Netz-Spannungen u1, u2, u3 in Form von Spannungs-Zeigern U1, U2, U3 der Netz-Spannung.

Als Messperiode p kann eine Periode angesehen werden, die auch mehr als eine Netzspannungsperiode dauern kann, welche auch als Spannungs-Grundschwingungs-Perioden bezeichnet werden können, die dann dementsprechend gezählt werden.

Oft wird die Spannungsgrundschwingung als 1. Harmonische oder abgekürzt als "H1" der Netzspannung bezeichnet.

Die Daten der Vorrichtung zur Referenz-Phasen-Übertragung PHU wird mithilfe eines Senders beziehungsweise Empfängers UART, oder über eine interne Schnittstelle, wie eine serielle Schnittstelle, in der Zentraleinheit CU an ein Hochfrequenz-Modul RF_M entsprechend verteilt.

Ein Interrupt-Signal IS für den Null-Durchgang der Referenzspannung $U_{REF_H1}$ wird einem Referenz-Signal-Sender REF_TX innerhalb des Hochfrequenz-Moduls RF_M bereitgestellt, welcher wiederum eine Information bezüglich einer Zeit-Verzögerung $\Delta t_{EGS}$ von einem zentralen Oszillator OSC1 und einer verbundenen anführende Zähler-Vorrichtung LC erhält.

Die Zeit-Verzögerung $\Delta t_{EGS}$ zu Beginn einer Messperiode p ist eine Verzögerung zwischen dem Zeitpunkt $t0_{EGSp}$ der Aktivierung des Interrupt-Signals IS, also für den Null-Durchgang der Referenzspannung $U_{REF_H1}$, und dem Zeitpunkt $t_{EGS_SYNCp}$ des Aussendens vom Synchronisations-Rahmen MAC_SYNCF an die jeweilige Sensoreinheit SU.

Die beiden Zeitpunkte $t0_{EGSp}$ und $t_{EGS_SYNCp}$, sowie die Verzögerung $\Delta t_{EGS}$ werden im Hochfrequenz-Modul RF_M auf Basis der Zeitinformation $t_{EGS}$ ermittelt, welche der Oszillator OSC1 und eine verbundene anführende Zähler-Vorrichtung LC bereitstellen.

Im Synchronisations-Rahmen MAC_SYNCF werden Informationen über die Periodendauer $T_{p-1}$, also eine geschätzte aktuelle Spannungsperiode, die anhand der letzten beispielsweise 10 bis 30 Spannungsperiode der vorhergehenden Messperiode p-1 ermittelt wurde, und die Zeitverzögerung $\Delta t_{EGSp-1}$, welche zu Beginn der vorhergehenden Messperiode p-1, aber nach dem Aussenden vom Synchronisations-Rahmen MAC_SYNCF ermittelt wurde, sowie der Zeitpunkt $t0_{EGSp}$ der Aktivierung des Interrupt-Signals IS, also für den Null-Durchgang der Referenzspannung $U_{REF_H1}$, als Wert vom führenden Zähler LC übertragen.

Der Beginn der Aussendung des Kennsignal beziehungsweise SYNC-Frames MAC_SYNCF entspricht implizit dem Zeitpunkt $t_{EGS_SYNCp} = t0_{EGSp} + \Delta t_{EGSp}$.

Die Information über die Zeitverzögerung $\Delta t_{EGSp}$ entsteht in dem Ausführungsbeispiel erst nach dem Aussenden des Synchronisations-Rahmens MAC_SYNCF und wird mit dem nächsten Synchronisations-Rahmen MAC_SYNCF zu Beginn der Messperiode p+1 an die jeweilige Sensoreinheit SU übertragen.

Erst dann, also einen Messzyklus später, ist die Kompensation der Zeitverzögerung $\Delta t_{EGSp}$ für die Messperiode p möglich.

Das Hochfrequenz-Moduls RF_M stellt auch eine Berechnungs-Vorrichtung CALC zur Berechnung von Wirk- und Blindleistung P und Q aus entsprechenden Spannungen/ Spannungszeigern und Strömen/ Stromzeigern bereit.

Über eine Hochfrequenz-Übertragungsstrecke RF_L erfolgt die drahtlose Übertragung von Synchronisations-Informationen zu einer oder mehreren Sensoreinheiten SU, sowie die Übertragung von erfassen Sensordaten von den Sensoreinheiten SU zur Zentraleinheit CU, beispielsweise in Form einer "unicast"-Datenübertragung UC_D, wie weiter unter näher beschrieben.

Die Sensoreinheiten SU sind jeweils lokale Kontroll-Vorrichtungen zur Daten-Erfassung durch entsprechende Sensor-Vorrichtungen.

Die Hochfrequenz-Übertragungsstrecke RF_L kann einen Synchronisations-Rahmen MAC_SYNCF mittels MAC-Layer-basiertem "Multicast" des Synchronisations-Rahmens übermitteln.

Die Sensoreinheit SU weist eine Kompensations-Vorrichtung DCOMP für die Zeit-Verzögerung $\Delta t_{RF_L}$ in der Hochfrequenz-Übertragungsstrecke RF_L auf, sowie einen lokalen Oszillator OSC2 und eine verbundene folgende Zähler-Vorrichtung FC, welche eine Zeitinformation $t_{3NA}$ bereitstellen.

Die Zeit-Verzögerung $\Delta t_{RF_L}$ berücksichtigt auch die Zeit-Verzögerung im Empfänger innerhalb der Sensoreinheit SU bis zur Kompensations-Vorrichtung DCOMP.

Die Zeit $t_{3NA}$ ist der lokale Wert des folgenden Zählers FC in der lokalen Kontroll-Vorrichtung, also der Sensoreinheit SU.

Es erfolgt in der Sensoreinheit SU eine Synchronisation der Erfassung von Strom-Zeigern mit dem Null-Durchgang der Referenzspannung $U_{REF_H1}$ in der Zentraleinheit CU.

Nach der Kompensation der Zeit-Verzögerung der Hochfrequenz-Übertragungsstrecke RF_L in der Kompensations-Vorrichtung DCOMP entsprechen die Empfangszeitpunkte $t0_{3NAp}$ und $t0_{3NAp+1}$, der Synchronisations-Rahmen MAC_SYNCF am Beginn der Messperioden p und p+1 den entsprechenden Sendezeitpunkten $t_{EGS_SYNCp}$ und $t_{EGS_SYNCp+1}$ in der Zentraleinheit CU.

Anhand des am Beginn der Messperiode p übermittelten Zeitpunktes $t0_{EGSp}$ und der am Beginn der Messperiode p+1 übermittelten Zeitpunktes $t0_{EGSp+1}$ und den Informationen über die Zeitverzögerung $\Delta t_{EGSp}$ und die Periodendauer $T_p$ wird in der Sensoreinheit SU zunächst der Zeitpunkt $t0_{EGSp+1}$ des Null-Durchgangs der Referenzspannung $U_{REF_H1}$ als Zeitpunkt $t0_{EGSp+1}{}^* = t0_{3NAp} + t0_{EGSp+1} - t0_{EGSp} - \Delta t_{EGSp}$ geschätzt, der dem geschätzten Wert vom folgenden Zähler FC in der Sensoreinheit SU zum Zeitpunkt $t0_{EGSp+1}$ in der Zentraleinheit CU entspricht.

Dann wird der Null-Durchgangszeitpunkt der nächsten Periode der Referenzspannung $U_{REF_H1}$ als Zeit $t0_{3NAi+101} = t0_{EGSp+1}{}^* + T_p$ bestimmt.

Die Zeiten mit dem Index * deuten auf einen geschätzten Wert hin und entsprechen dem folgenden Zähler FC.

Die Zeiten mit dem Index 3NA entsprechen Zeiten in der Sensoreinheit SU und werden durch den folgenden Zähler FC gebildet.

Die Zeiten mit dem Index EGS entsprechen Zeiten in der Zentraleinheit CU und werden durch den führenden Zähler LC gebildet.

Die eigentliche Strommessung bzw. Strom-Zeiger Ermittlung in der Messperiode p+1 beginnt in der Sensoreinheit SU mit dem Zeitpunkt $t0_{3NAi+101}$.

Sensordaten SD werden von der Sensoreinheit SU in Form von Strom-Werten I erfasst, verarbeitet und als Strom-Zeiger-Werte berechnet, und anschließend optional an eine Aggregations-Vorrichtung AGG zur Verarbeitung übergeben.

Sensor-Daten SD können beispielsweise Wechselstromwerte des Primär-Stroms in einem Energieversorgungsnetz sein.

Unter einer Aggregation kann beispielsweise eine Mittelwertbildung über mehrere Messwerte, beispielsweise über mehrere Wechselstromperioden innerhalb einer Messperiode, verstanden werden, wobei auch andere statistische Methoden zur Abbildung von Messwerten geeignet sein können.

Im Synchronisations-Rahmen oder Frame MAC_SYNCF werden Informationen zu dessen Sende-Zeitpunkt in Form einer Zählerstanddifferenz $\Delta t_{EGSp}$ per "multi-cast"-Übertragung an die Sensoreinheit SU übertragen, sowie die Periodendauer $T_{p-1}$ des Spannungsverlaufs $U_{REF_H1}$ aus der vorigen Periode p-1, und der Zeitpunkt $t0_{EGSp}$ der Aktivierung des Interrupt-Signals IS, also für den Null-Durchgang der Referenzspannung $U_{REF_H1}$, als Wert $t0_{EGSp}$ vom führenden Zähler LC mitübertagen.

Von der Sensoreinheit SU werden Informationen zu den erfassten Sensordaten SD in Form von Werten zum komplexen Stromzeiger $\underline{I}_{H1p}$ zur Periode mit Index p, sowie der Stromzeiger $\underline{I}_{H1p}$, je nach Ausführung als Einzelwert oder als aggregierter Wert, per "uni-cast"-Übertragung an die Zentraleinheit CU übertragen.

In der Zentraleinheit CU werden für jede Periode i (der Grundschwingung) der Netzwechselspannung $u_1$, $u_2$, und $u_3$ eines 3-Phasensystems Spannungszeiger $\underline{U1}_i$, $\underline{U2}_i$ bzw. $\underline{U3}_i$ gebildet.

Auch die Spannungszeiger können optional aggregiert werden.

Die Spannungen $u_1$, $u_2$, und $u_3$ können beispielsweise Spannungen an Phasenleitern $L_1$, $L_2$, bzw. $L_3$ eines Energieversorgungsnetzes sein.

Eine der Spannungen, wie beispielsweise $u_1$, wird als Referenzspannung $U_{REF_H1}$ ausgewählt.

Für jeden Messzyklus p, welcher beispielsweise aus 100 Grundschwingungsperioden der Referenzspannung $U_{REF_H1}$ umfasst, wird ein Null-Punktdurchgangszeitpunkt $t0_{EGS_p}$ der Referenzspannung $U_{REF_H1}$ bestimmt, welches phasensynchron mit dem Beginn der ersten Grundschwingungsperiode der Referenzspannung $U_{REF_H1}$ ist und sich auf den in der Zentraleinheit CU vorhandene Mikrosekundenzähler in Form des führenden Zählers LC mit der Zeit $t_{EGS}$ bezieht.

Der Nullpunkt-Durchgangs-Zeitpunkt $t0_{EGS_p}$ bezieht sich auf den aktuellen Zeitpunkt in der zentralen Kontroll-Vorrichtung, während sich der Nullpunkt-Durchgangs-Zeitpunkt $t0_{EGS_{p-1}}$ auf den ersten Nullpunkt-Durchgangs-Zeitpunkt der vorhergehenden Messperiode bezieht.

Zusätzlich wird die aktuelle Netzspannungs-Periodendauer $T_p$ bestimmt.

Als zusätzliche Information kann optional auch_der Zeitpunkt in Form eines Differenzzählerstands $\Delta t_{EGSP-1}$ bestimmt werden, wann die Werte für den Zählerstand $\Delta t_{EGSP-2}$ und die Periodendauer $T_{p-2}$ (in der Figur nicht dargestellt) in der vorhergehenden Messperiode p-1 an die Sensoreinheit SU mittels eines Kennsignals, dem sogenannten SYNC-Frames MAC_SYNCF, übermittelt wurden.

Der Zeitpunkt $\Delta t_{EGSP-1}$ dient zur Korrektur der zeitlichen Synchronität zwischen der Zentraleinheit CU und zumindest einer Sensoreinheit SU in der aktuellen Messperiode p.

Neben dem Nullpunkt-Durchgangs-Zeitpunkt $t0_{EGS_p}$, der Periodendauer $T_p$ und der optionalem Zählerstands-differenz $\Delta t_{EGSP-1}$ enthält das Kennsignal beziehungsweise der Synchronisations-Rahmen beziehungsweise "SYNC-Frame" MAC_SYNCF, welcher den Beginn der Messperiode p einleitet, auch die Nummer von der Messperiode p selbst, die Nummer i der ersten Grundschwingungsperiode der Referenzspannung $U_{REF_H1}$ in dieser Messperiode und eine Netzwerkquelladresse der Zentraleinheit CU, die als Senderidentifikation im SYNC-Frame MAC_SYNCF dient.

Die Messperiode wird auf Basis eines Grundschwingungsperioden-Zählers festgelegt, beispielsweise in Form einer Zeiteinheit.

In zumindest einer oder auch allen Sensoreinheiten SU werden in der Messperiode p auf Basis der übermittelten Werte für die Nullpunkt-Durchgangs-Zeitpunkte $t0_{EGS_p}$ und $t0_{EGS_{p-1}}$ in der zentralen Kontroll-Vorrichtung CU, der aktuellen Periodendauer $T_p$, und des optionalen Zeitpunkts der Abweichung der Zeit-Verzögerung $\Delta t_{EGSP-1}$ synchron Null-Punkt-Durchgangszeitpunkte der Referenzspannung $U_{REF_H1}$ in der Zentraleinheit CU bestimmt, wobei diese Zeitpunkte Werten des jeweiligen führenden Zählers LC entsprechen.

Auf Basis von Sensordaten SD in Form von Wechselstromwerten wird der Stromzeiger $\underline{I}_{H1i}$ für jede einzelne Oberschwingungsperiode i innerhalb der Messperiode p gebildet, und entweder einzeln oder als über die Messperiode p aggregierter Stromzeiger $\underline{I}_{H1p}$ an die Zentraleinheit CU in einem Sensor-Datenframe mit Sensordaten SD übermittelt.

In demselben Sensordatenframe können beispielsweise auch der Zeitstempel $t_{3NA}$ der jeweiligen Sensoreinheiten SU, eine Nummer i der ersten Grundschwingungsperiode der Referenzspannung $U_{REF_H1}$ in der Messperiode p und optional die Nummern der aktuellen Messperiode p und/oder der vorhergehenden Messperioden p-1, p-2 enthalten sein.

Nach dem Empfang der Sensordaten SD in der Zentraleinheit CU werden die zugehörigen, synchron erfassten Spannungs- und Stromzeiger verwendet, um die Wirk- und Blindleistungswerte $P_p$ und $Q_p$ zu berechnen.

Mit anderen Worten wird im Ausführungsbeispiel der Fig. 5 der Sendezeitpunkt des SYNC-Frames MAC_SYNCF als Anfang vom SYNC-Frames-"Header" MAC_SYNCF und zusätzlich als Zählerstand(s-Differenz) des Zählers LC der Zentraleinheit CU über den Referenz-Signal-Sender REF_TX bereitgestellt, vorzugsweise entsprechend einer Zeit-Auflösung im Mikrosekunden-Bereich.

Im folgenden SYNC-Frame MAC_SYNCF wird somit der Null-Punktdurchgang $t0_{EGSp}$ als Anfang vom Synchronisations-Rahmen MAC_SYNCF und als aktueller Zählerstand zum Zeitpunkt $t0_{EGSp}$ des Null-Punktdurchgangs und die Differenz der Zählerstände $\Delta tEGS_{p-1}$ zwischen dem vorhergehenden Referenz-Null-Punktdurchgang und dem vorhergehenden Sendezeitpunkt übertragen.

Die Signallaufzeit im vorliegenden Ausführungsbeispiel wird somit in der jeweiligen Sensoreinheit SU zum Beginn der aktuellen Messperiode p korrigiert, indem aus dem vorhergehenden SYNC-Frame MAC_SYNCF der Messperiode p-1, den Null-Punktdurchgang $t0_{EGS_{p-1}}$ und aus dem aktuell empfangenen SYNC-Frame MAC_SYNCF den Null-Punktdurchgang $t0_{EGS_p}$ aus der aktuellen Messperiode p und die Sendeverzögerung $\Delta t_{EGSP-1}$ herangezogen wird.

Es kann die Zeitverzögerung $\Delta t_{RF_L}$ bei der Kompensation durch die DCOMP berücksichtigt werden, welche jedoch sehr klein ist, und der Einfachheit halber auch vernachlässigt werden kann.

Es sind in diesem Fall daher immer zwei aufeinanderfolgende SYNC-Frames notwendig, um in der Sensoreinheit SU den Null-Punktdurchgang der Referenzspannung $U_{REF_H1}$ zu ermitteln.

Das erste Ausführungsbeispiel kann daher auch mit folgenden Worten beschrieben werden.

Das Verfahren zur Zeitsynchronisation von Sensoreinheiten in einem verteilten System dient zur Bestimmung von Blind und Wirkleistung in der Zentraleinheit CU mit zumindest einer Sensoreinheit SU und basiert auf einer Synchronisation des Nullpunktdurchgangs der Referenzspannung zwischen der Zentraleinheit CU mit einer Sensoreinheit SU, also zwischen dem ersten, führenden Zähler LC mit einem ersten, zentralen Oszillator OSC1 der Zentraleinheit CU und einem zweiten, folgenden Zähler FC mit einem zweiten, lokalen Oszillator OSC2 des jeweiligen Sensoreinheit SU.

Dabei werden die Anfangszeitpunkte und der darauffolgende zeitliche Verlauf für die Berechnung von Stromzeigern in der Sensoreinheit SU mit Zeitpunkten des Nulldurchgangs der Spannungsgrundschwingung synchronisiert.

Dies entspricht einer Zeitsynchronisierung zwischen der Zentraleinheit CU mit der Sensoreinheit SU, also einer Abstimmung zwischen der Zeitbasis $t_{EGS}$ eines führenden Zeitgebers oder Zählers LC innerhalb der Zentraleinheit CU mit einer entsprechend folgenden Zeitbasis $t_{3NA}$ eines internen, führenden Zählers FC der jeweiligen Sensoreinheit SU.

Es muss sich nicht um eine absolute Uhrzeit handeln, sondern kann sich auf die einzelnen Spannungsgrundschwingungsperioden und/oder auf die Taktperioden der jeweiligen Zähler LC, FC beziehen.

Die Sensoreinheiten SU weisen jeweils eine interne Zeiteinheit FC auf, wobei diese internen Zähler als Zeiteinheiten dienen, die eine Zeitbasis erzeugen basierend auf den nummerierten Netzspannungsperioden und/oder in einer Zeiteinheit ($t_{3NA}$) auf Mikrosekunden-Basis.

Von den Sensoreinheiten SU werden Sensordaten SD in Form von Stromzeigern mit einer vorgegebenen zeitlichen Auflösung von beispielsweise 1 Mikrosekunde periodisch erfasst, und/oder mit Netzspannungsperiodennummer versehen, und über ein Funknetz RL_L an die Zentraleinheit CU übermittelt werden.

Im Funknetz beziehungsweise an der Hochfrequenz-Übertragungsstrecke RF_L wird in regelmäßigen, zeitlichen Abständen ein Kennsignal ausgesendet wird, beispielsweise alle zwei Sekunden ein SYNC-Frame MAC_SYNCF von der Zentraleinheit CU an die jeweilige Sensoreinheit SU.

Der Empfang des Kennsignals SYNC-Frame MAC_SYNCF wird in einer jeweiligen Sensoreinheit SU überwacht.

Bei Empfang eines charakteristischen Zeitmerkmal des Kennsignals wird jeweils ein aktueller Wert der internen Zeiteinheit FC der jeweiligen Sensoreinheit SU mit zumindest einer im Kennsignal enthaltene Senderidentifikation gespeichert, also die darin enthaltenen Daten, wie die Quelladresse und/oder Authentisierungsdaten vom RF-Modul RF_M in der Zentraleinheit CU, der darin enthaltenen charakteristischen Zeitmerkmale wie Zeitstempel, Zeitverzögerungs-Information, Nummer der jeweiligen Netzspannungsperiode, etc., und einen aktuellen Wert der eigenen Zeiteinheit der jeweiligen Sensoreinheit SU, beispielsweise aus dem Empfangszeitstempel des SYNC-Frames MAC_SYNCF.

Beim Erfassen von Sensordaten SD wird ein weiterer, aktueller Wert der internen Zeiteinheit FC der jeweiligen Sensoreinheit SU gespeichert, beispielsweise wird jeweils ein aktueller Zeitstempel der Zeiteinheit der jeweiligen Sensoreinheit SU als auch die Nummer der jeweiligen Netzspannungsperiode zugeordnet und mit diesen Sensordaten SD gespeichert.

Der Nulldurchgang wird daher auf die lokale Zeiteinheit im Sensor synchronisiert, wobei nur der Nulldurchgang im Sensor möglichst genau reproduziert werden soll, und ein Bezug zur Zeiteinheit in der Zentraleinheit nicht notwendig ist.

Den erfassten Sensordaten SD wird zumindest der bei Empfang des charakteristischen Zeitmerkmals des Kennsignals gespeicherte Wert der internen Zeiteinheit FC, die zugehörige Senderidentifikation des Kennsignals MAC_SYNCF, und der weitere, bei Erfassen der Sensordaten SD gespeicherte Wert der internen Zeiteinheit zugeordnet werden und gemeinsam mit den Sensordaten SD an die Zentraleinheit CU übertragen.

Dies kann über das Datentelegramm, welches von der jeweiligen Sensoreinheit SU an die Zentraleinheit CU gesendet wird, erfolgen, welches die Nummer der Netzspannungsperiode, auf welche sich die Messdaten beziehen, sowie die zugehörige Adresse von der Zentraleinheit CU, nämlich als Senderidentifikation des Kennsignals, an welche sie gesendet werden, und ein aktueller Zeitstempel der Zeiteinheit der jeweiligen Sensoreinheit SU, welcher beim Erfassen von Daten zugeordnet wird.

Anhand der Senderidentifikation wird eine Bezugszeitbasis und anhand des bei Empfang des charakteristischen Zeitmerkmals des Kennsignals gespeicherten Werts der internen Zeiteinheit FC der jeweiligen Sensoreinheit SU und des beim Erfassen der Sensordaten SD weiteren, gespeicherte Werts der internen Zeiteinheit FC der jeweiligen Sensoreinheit SU eine zeitliche Relation der übertragenen Sensordaten SD der jeweiligen Sensoreinheit SU zur Bezugszeitbasis abgeleitet, beispielsweise anhand der jeweiligen Netzperiodennummer aus dem empfangenen Datentelegramm und/oder des darin enthaltenen Zeitstempels.

Die Zentraleinheit CU erfasst Spannungs- und Phasenwerte von zumindest einem der drei Phasenleiter eines Energieversorgungsnetzes, aus welchen Synchronisierungs-Daten $t0_{EGSp}$ und Tp zur Frequenz oder Periodendauer, sowie zur Phasenlage der Spannung zumindest eines der drei Phasenleiter in Bezug auf den Erfassungszeitpunkt der Spannungs- und Phasenwerte des zumindest einen der drei Phasenleiter ermittelt und an die Sensoreinheiten SU übermittelt werden.

Die jeweilige Sensoreinheit SU erfasst die jeweiligen Sensordaten SD in Form von Stromwerten in Bezug auf die Synchronisierungs-Daten $t0_{EGS_p}$ und $T_p$, welche an die Zentraleinheit CU übertragen werden.

In der Zentraleinheit CU werden aus den Spannungswerten und Stromwerten Leistungen, insbesondere Wirk- und Blindleistungen, berechnet.

Die Synchronisierungs-Daten $t0_{EGS_p}$ betreffend die Phasenlage der Spannung zumindest eines der drei Phasenleiter in Bezug auf den Erfassungszeitpunkt der Spannungs- und Phasenwerte des zumindest einen der drei Phasenleiter sind durch den Zeitpunkt der Übermittlung des SYNC-Frames MAC_SYNCF von der Zentraleinheit CU an die jeweilige Sensoreinheit SU gebildet.

Die Synchronisierungs-Daten $t0_{EGS_p}$, $T_p$ können mithilfe des Kennsignals MAC_SYNCF an die Sensoreinheiten SU übermittelt werden.

Die Synchronisierungs-Daten $t0_{EGS_p}$, $T_p$ können über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

Die Zentraleinheit CU kann ferner Spannungs- und Phasenwerte von einer Phasenleitung des Energieversorgungsnetzes und erste ergänzende Synchronisierungs-Daten $\Delta t_{EGS_{p-1}}$ erfassen, welche in einem vorhergehenden Zeitraum erfasst wurde, welche vor dem aktuellen Zeitraum liegt, in welchem die Synchronisierungs-Daten $t0_{EGS_p}$, $T_p$ erfasst werden.

Die ersten ergänzenden Synchronisierungs-Daten $\Delta t_{EGS_{p-1}}$ können an die jeweilige Sensoreinheit SU übermittelt werden, bevorzugt mithilfe des Kennsignals MAC_SYNCF.

Die ersten ergänzenden Synchronisierungs-Daten $\Delta t_{EGS_{p-1}}$ können bei der Erfassung der jeweiligen Sensordaten SD durch die jeweilige Sensoreinheit SU berücksichtigt werden.

Zur Verwendung der Zählerstandsdifferenz $\Delta t_{EGS_{P-1}}$ ist es offensichtlich notwendig, dass die Synchronisierung periodisch erfolgt.

Die Zentraleinheit CU erfasst somit Spannungs- und Phasenwerte von zumindest einem der drei Phasenleiter eines Energieversorgungsnetzes als Stromzeiger über mehr als eine Grundschwingungs-Periode der Spannung.

Die Stromzeiger der jeweiligen Sensoreinheit SU werden zu aggregierten Stromzeigern ($\underline{I}_{H1p}$) aggregiert, und die aggregierten Stromzeiger $\underline{I}_{H1p}$ an die Zentraleinheit CU übertragen.

In der Zentraleinheit CU werden aus den Spannungswerten und den aggregierten Stromzeigern ($\underline{I}_{H1p}$) Leistungen berechnet.

In der jeweiligen Sensoreinheit SU werden über eine Messperiode p, p+1, ... die für einen Wechselstrom oder eine Wechselspannung pro Wechselspannungs-Grundschwingungsperiode gebildeten komplexwertigen Wechselstrom- oder Spannungszeiger gemittelt und als komplexer Mittelwert mit Bezug auf den Beginn der Messperiode bereitgestellt.

Es werden also die Perioden der Wechselspannung i als auch die Messperioden p, p+1, ... in der Zentraleinheit CU nummeriert und an die Sensoreinheit SU übermittelt.

Mit Bezug auf die Nummer der Periode der Wechselspannung kann also gelten, dass diejenige Grundschwingungsperiode der Referenzspannung gilt, oder mit Bezug auf die lokale Referenzzeit der internen Zeit des folgenden Zählers FC, welche mit der Zeit der Zentraleinheit CU mit dem führenden Zähler LC an die Sensoreinheit SU übermittelt wurde.

Dabei sind die aufeinander folgenden Messperioden in der Sensoreinheit SU mit solchen in der Zentraleinheit CU mittels Synchronisierungsnachrichten synchronisiert, um der jeweiligen Sensoreinheit SU den exakten zeitlichen Beginn der Messperiode mitteilen.

Die Zentraleinheit CU kann jedoch auch Spannungs- und Phasenwerte von zwei oder mehr der drei Phasenleiter eines Energieversorgungsnetzes erfassen.

Das Aggregieren der Stromzeiger kann unter Berücksichtigung deren jeweiligen Beträge und Phasenwerte durch Mittelung innerhalb der Messperioden p erfolgen, wobei das Aggregieren der Stromzeiger unter Berücksichtigung der jeweiligen internen, folgenden Zeiteinheit FC der jeweiligen Sensoreinheit SU durch Mittelung über die Messperioden p erfolgt.

Das Aggregieren der Stromzeiger $\underline{I}_{H1p}$ kann optional nur jene der Grundschwingungs-Perioden i der Netzspannung berücksichtigen, bei welchen die Werte für die Stromzeiger innerhalb von vordefinierten Grenzwerten liegen, um beispielsweise Störungen auf den Netzleitungen außer Acht zu lassen.

Während der Mittelung über die Messperiode p werden dadurch nur die validen Strombeziehungsweise Spannungszeiger der einzelnen Wechselspannungs-Grundschwingungsperioden verwendet.

Jene Stromzeiger oder Werte, die beispielsweise durch ein Aufgetreten von Störimpulsen oder Energierückgewinnungsphasen verfälscht sind, werden in die Mittelung nicht aufgenommen.

In dem Fall verringert sich die effektive Mittelungsdauer innerhalb der Messperiode p, beziehungsweise die für die Mittelung verwendeten validen Strom-/Spannungszeiger bilden eine fragmentierte Menge.

Die aggregierten Stromzeiger $\underline{I}_{H1p}$ werden von der jeweiligen Sensoreinheit SU zur Zentraleinheit CU übertragen, insbesondere nach dem Ende der jeweiligen Messperiode mit Bezug auf die jeweilige Nummer der Grundschwingung zu Beginn der Messperiode und optional auf die Nummer der aktuellen Messperiode p und/oder den vorhergehenden Messperioden p-1, p-2.

Da die Messperioden in einer oder mehreren Sensoreinheiten SU und der Zentraleinheit CU synchronisiert sind, stellt die Zentraleinheit CU einen eindeutigen zeitlichen Bezug zwischen empfangenen komplexe Wechselstrom- und Spannungszeigermittelwerten anhand der mitübertragenen Bezugsinformationen her.

Die Stromzeiger können über mehr als eine Grundschwingungsperiode der Referenz-(Phasen) Spannung, also mehr als eine Spannungsperiode einer der drei Phasen des Energieversorgungsnetzes ermittelt werden, bevorzugt aus zumindest zehn Perioden, besonders bevorzugt aus zumindest 100 Perioden.

Die Phasenwinkel zwischen einzelnen Phasenspannungen in einem 3-phasigen 4-Leiterverteilnetz können zueinander exakt 120° betragen, jedoch kann auch nur der Betrag der Phasenspannungen unterschiedlich sein.

Unter dieser Annahme, kann nur die Phasenlage einer der Phasenspannungen als Referenz für die Messperiode p in der Zentraleinheit CU und folglich nach der Synchronisation in den jeweiligen Sensoreinheiten CU dienen.

Nach dem Empfang eines komplexen Wechselstromzeiger oder des aggregierten Werts, unter der Berücksichtigung dessen Zuordnung zu der entsprechenden Phasenspannung, kann der komplexe Wechselstromzeiger oder dessen aggregierter Wert entweder direkt übernommen oder um $\pm 120°$ gedreht, bevor er mit dem Betrag der Phasenspannung multipliziert wird, um die mittlere Wirk- und Blindleistung zu berechnen.

Die Drehung des Wechselstromzeiger als Vektors, welcher im kartesischen Koordinatensystem durch dessen komplexen Wert bestimmt ist, kann beispielsweise mittels Multiplikation mit einer sogenannten Rotationsmatrix erfolgen.

Alternativ kann die Drehung des komplexen Wechselstromzeigers oder des aggregierten Werts gleich nach dessen Berechnung in der Sensoreinheit SU erfolgen.

Dafür muss die Zuordnungsinformation zu dem jeweiligen Phasenspannungsleiter von der Zentraleinheit CU an die Sensoreinheiten SU laufend übermittelt werden, insbesondere dann, wenn sich die Referenzspannung für die zeitliche Synchronisierung der Messperiode in der Zentraleinheit CU und folglich in den Sensoreinheiten SU geändert hat.

Sollte eine oder sogar zwei der Phasenspannungen ausfallen, wird auf die nächste verfügbare Phasenspannung als Referenzspannung für die Synchronisation der Messperioden in Zentraleinheit CU und in den Sensoreinheiten SU verwendet.

In einem solchen Fall müssen die empfangenen komplexen Wechselspannungzeiger und /oder Wechselstromzeiger vor der Leistungsberechnung entsprechend angepasst rotiert werden.

Die Aggregation von komplexen Stromzeigern kann beispielsweise durch Anwendung folgender Zusammenhänge erfolgen:

$$I_{H1_k_RE} = \frac{\sqrt{2}}{N_p} \sum_{n=0}^{N_p-1} \left( x_{(k\times N_p+n)}\, Sin \frac{2\pi n}{N_p} \right)$$

$$I_{H1_k_IM} = -\frac{\sqrt{2}}{N_p} \sum_{n=0}^{N_p-1} \left( x_{(k\times N_p+n)}\, Cos \frac{2\pi n}{N_p} \right)$$

wobei

$N_p$ die Anzahl der Stromabtastwerte einer Grundschwingungsperiode der Referenzspannung innerhalb der Messperiode p ist,

$x_{(k\times N_p)}$, $x_{(k\times N_p+1)}$, ... , $x_{(k\times N_p+N_p-1)}$ die Strom-Abtastwerte/-Messdaten innerhalb der Referenzspannungsperiode k sind,

$I_{H1_k_RE}$ der Realteil des komplexen Stromzeiger $I_{H1_k}$ der Grundschwingungsperiode k der Referenzspannung innerhalb der Messperiode p ist,

$I_{H1_k_IM}$ der Imaginärteil des komplexen Stromzeiger $I_{H1_k}$ der Grundschwingungsperiode k der Referenzspannung innerhalb der Messperiode p ist und

*k* der Index / die Nummer der Referenzspannungsperiode k innerhalb der Messperiode p ist.

Es kann vorteilhaft sein, eine Anpassung der Abtastzeitpunkte der Sensordaten eines entsprechenden Sensors der Sensoreinheit auf die jeweilige Periodendauer durchzuführen, um Änderungen in den Periodendauern durch Netzeinflüsse einfacher zu berücksichtigen.

Dies kann durch eine entsprechende Konversion der Messdaten oder eine Anpassung der Abtastrate des entsprechenden Sensors der Sensoreinheit erfolgen.

Ferner sind die folgenden Zusammenhänge anzuwenden:

$$I_{H1_{p_RE}} = \frac{1}{Mv_p} \sum_{k=0}^{Mp-1} \left(V_k \times I_{H1_{k_RE}}\right),$$

$$I_{H1_{p_IM}} = \frac{1}{Mv_p} \sum_{k=0}^{Mp-1} \left(V_k \times I_{H1_{k_IM}}\right),$$

wobei

| | |
|---|---|
| $M_p$ | die Anzahl der Messwerte / Stromzeiger $I_{H1k}$ innerhalb der Messperiode p ist, |
| $M_{vp} \leq M_p$ | die Anzahl der Messwerte / Stromzeiger $I_{H1k}$ mit den Gültigkeits-Attributen $V_k$ = 1 innerhalb der Messperiode p ist, wobei jene Messwerte $I_{H1k}$ bzw. deren der Realteile $I_{H1k_RE}$ und Imaginärteile $I_{H1k_IM}$, welche durch eine Energiegewinnung während einer Grundschwingungsperiode k = i+1, i+2, ... betroffen sind, mit den entsprechenden Gültigkeits-Attributen $V_k$ = 0 als ungültig gekennzeichnet werden, und die gültigen Messwerte erhalten Gültigkeits-Attribute $V_k$ = 1, |
| $I_{H1k_RE}$ | der Realteil des komplexen Stromzeiger $I_{H1k}$ der Grundschwingungsperiode k der Referenzspannung innerhalb der Messperiode p ist, |
| $I_{H1k_IM}$ | der Imaginärteil des komplexen Stromzeiger $I_{H1k}$ der Grundschwingungsperiode k der Referenzspannung innerhalb der Messperiode p ist, |
| $I_{H1p_RE}$ | der Realteil des komplexen aggregierten Stromzeiger $I_{H1p}$ für die Messperiode p ist und |
| $I_{H1p_IM}$ | der Imaginärteil des komplexen aggregierten Stromzeiger $I_{H1p}$ für die Messperiode p ist. |

Die für jede einzelne Periode berechneten Messwerte $I_{H1k_RE}$ und $I_{H1k_IM}$ werden anschließend jeweils über die Messperiode p zu den gewünschten Stromzeigern $I_{H1p_RE}$ bzw. $I_{H1p_IM}$ aggregiert, wie vorher ausgeführt.

Die Werte für $M_p$ werden normalerweise als 100 Grundschwingungen je Messperiode für ein 50 Hz System gewählt, oder 120 Grundschwingungen je Messperiode für ein 60 Hz System.

Durch mögliche Schwankungen der Netzfrequenz kann eine Messperiode p auch weniger als 100 bzw. 120 Grundschwingungen umfassen.

Die aggregierten Strom-Werte $I_{H1p_RE}$ bzw. $I_{H1p_IM}$ werden als aggregierter, komplexer Stromzeiger $\underline{I}_{H1p}$ dann an die Zentraleinheit CU übertragen.

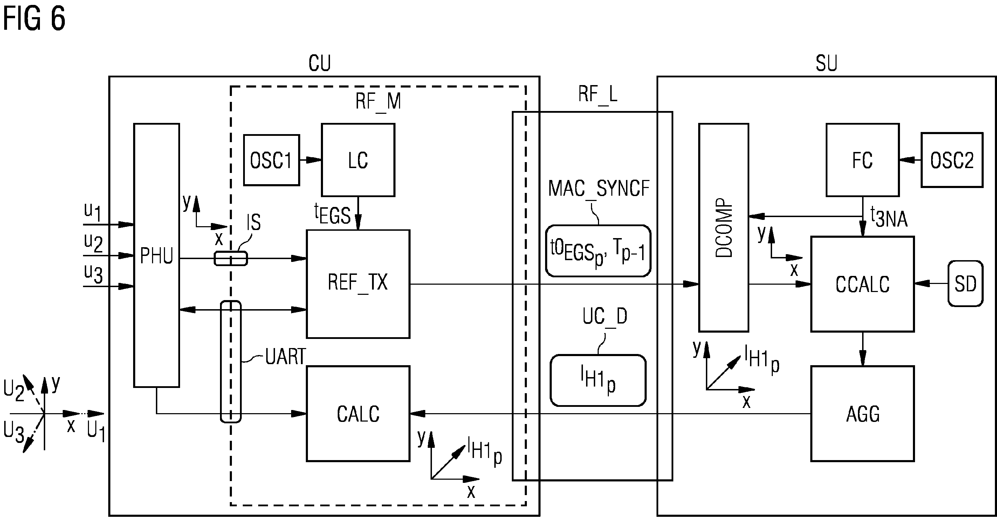

**Fig. 6** zeigt ein zweites Ausführungsbeispiel der Erfindung in Form eines Blockschaltbildes.

Die Information über die Zählerstandsdifferenz $\Delta t_{EGSp-1}$ im Kennsignal beziehungsweise SYNC-Frame MAC_SYNCF der Messperiode p wird in diesem Ausführungsbeispiel nicht übertragen.

Es wird davon ausgegangen, dass die Aussendung des SYNC-Frames MAC_SYNCF in der Zentraleinheit CU und insbesondere im Sender REF_TX synchron mit Null-Punktdurchgangs-Zeitpunkt der Referenzspannung $U_{REF_H1}$ erfolgt und lediglich die Laufzeitkorrektur für den Empfang des SYNC-Frame MAC_SYNCF in der Sensoreinheit SU erfolgt, um die zeitliche Synchronität zwischen der Zentraleinheit CU und den jeweiligen Sensoreinheiten SU herzustellen.

In diesem Ausführungsbeispiel wird beim Senden durch den Referenz-Signal-Sender REF_TX der Zentraleinheit CU ein Zählerstand übergeben, bei dem mit dem Aussenden des SYNC-Frames-Headers MAC_SYNCF begonnen werden soll.

Im Gegensatz zum ersten Ausführungsbeispiel ist die Zeit-Verzögerung $\Delta t_{EGSp}$ zu Beginn einer Messperiode p zwischen dem Zeitpunkt $t0_{EGSp}$ der Aktivierung vom Interrupt-Signal IS, also für den Null-Durchgang der Referenzspannung $U_{REF_H1}$, und dem Zeitpunkt $t_{EGS_SYNCp}$ des Aussendens vom Synchronisations-Rahmen MAC_SYNCF an die jeweilige Sensoreinheit SU vernachlässigbar und muss daher nicht übertragen werden.

Im Synchronisations-Rahmen MAC_SYNCF wird lediglich als Information über die Periodendauer $T_{p-1}$ übertragen, also die geschätzte aktuelle Spannungsperiode, die beispielsweise anhand der letzten 10 bis 30 Spannungsperioden der vorhergehenden Messperiode p-1 ermittelt wurde.

Der Beginn der Aussendung des SYNC-Frames MAC_SYNCF entspricht implizit dem Zeitpunkt $t_{EGS_SYNCp} \approx t0_{EGSp}$, da der Betrag der Verzögerung $\Delta t_{EGSp}$ meist vernachlässigbar ist.

Das bedeutet, dass gleich zu Beginn desselben Messzyklus p die Kompensation der empfangsseitigen Zeitverzögerung des SYNC-Frames MAC_SYNCF für die Messperiode p und die Synchronisation zwischen der Zentraleinheit CU und der jeweiligen Sensoreinheit SU erfolgt.

Das Aussenden des SYNC-Frames MAC_SYNCF erfolgt von der Zentraleinheit CU, um eine Grundschwingungsperiode verzögert, genau synchron mit dem Null-Punktdurchgangs-Zeitpunkt der Referenzspannung $U_{REF_H1}$.

Mit dem Aussenden des SYNC-Frames MAC_SYNCF wird implizit die Information über den Zeitpunkt $t0_{EGSp}$ übertragen.

Im SYNC-Frame MAC_SYNCF muss in diesem Beispiel sonst kein weiterer Zählerstand der Zentraleinheit CU übertragen werden.

Die RF-Empfängereinheit in der Sensoreinheit SU stellt den Zählerstand zum Empfangszeitpunkt des SYNC-Frames-Headers MAC_SYNCF zur Verfügung.

Mit dem Empfang des SYNC-Frames MAC_SYNCF zum Zeitpunkt $t0_{EGSp}$ der jeweiligen Sensoreinheit entspricht die Zeit $t0_{EGSp}{}^{*} = t0_{3NAp}$.

Die Signallaufzeit über die Hochfrequenz-Übertragungsstrecke RF_L im vorliegenden Ausführungsbeispiel wird in der jeweiligen Sensoreinheit SU korrigiert, indem der Null-Punktdurchgangszeitpunkt der Referenzspannung $U_{REF_H1}$ direkt als korrigierter Empfangszeitpunkt des SYNC-Frame-Headers übernommen wird.

Bei diesem Verfahren kann in der Sensoreinheit SU aus jedem SYNC-Frame MAC_SYNCF der Null-Punktdurchgangs-Zeitpunkt der Referenzspannung $U_{REF_H1}$ ermittelt werden.

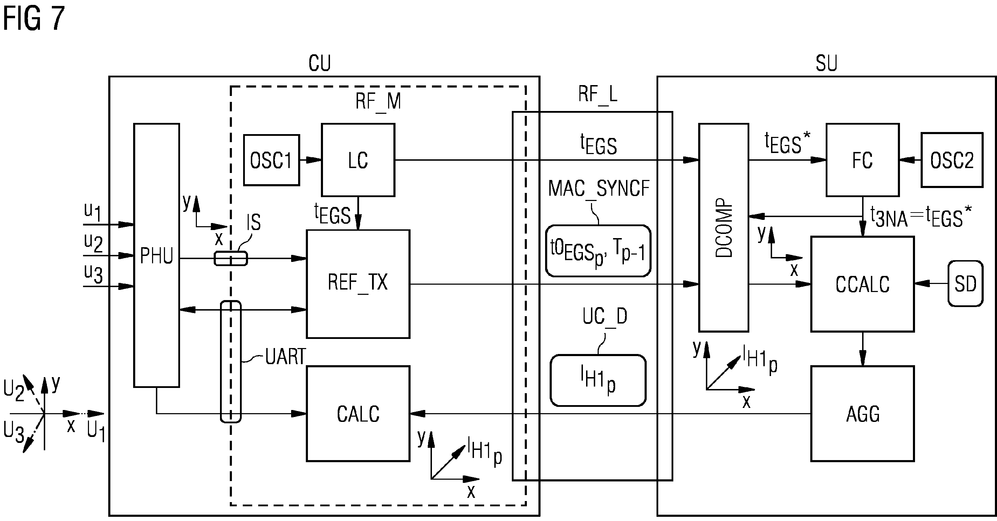

Fig. 7 zeigt ein drittes Ausführungsbeispiel der Erfindung in Form eines Blockschaltbildes, bei welchem der Zeitwert $t_{EGS}$ des Zählers in der Zentraleinheit CU mittels separater Zeitsynchronisierungs-Frames an die Sensoreinheit SU übertragen und nach einer Laufzeitkorrektur der Zeitbasis $t_{3NA}$ in der Sensoreinheit SU durch den Wert $t_{EGS}$ der Zeitbasis der Zentraleinheit CU übernommen wird.

Diese Korrektur von $t_{3NA} = t_{EGS}$ ist möglich, indem separate Zeitsynchronisierungs-Frames in der Zentraleinheit CU vorab vorbereitet werden und an die Sensoreinheit SU zu den in den Frames enthaltenen Zeitpunkten ausgesendet werden.

Dies ermöglicht in der Zentraleinheit CU die vorher beschriebenen SYNC-Frames MAC_SYNCF zum Start jeder Messperiode p nicht synchron mit dem Null-Punktdurchgangs-Zeitpunkt $t0_{EGS_p}$ der Referenzspannung $U_{REF_H1}$ zu senden, sondern innerhalb der ersten Periode der Referenzspannung $U_{REF_H1}$, da die Information über den Null-Punktdurchgangs-Zeitpunkt im Wert $t0_{EGS_p}$ enthalten wird, der sich sowohl auf die Zeit $t_{EGS}$ als auch auf die laufend synchronisierte Zeitbasis $t_{3NA}$ der Sensoreinheit SU bezieht.

Dadurch ist die Übertragung im SYNC-Frame MAC_SYNCF des Zeitpunkt-Wertes der Sendeverzögerung $\Delta t_{EGSp-1}$ nicht notwendig und der zeitliche Abstand zwischen dem Beginn der Messperiode p und dem bisherigen zeitlichen Referenzpunkt von $t0_{EGS_{p-1}}$ aus dem ersten Ausführungsbeispiel in der Figur 3 auf den Referenzpunkt von $t0_{EGSp}$ verkürzt wird.

Mit anderen Worten kann die Zentraleinheit CU ferner eine interne, zentrale Zeiteinheit LC aufweisen, deren Wert zweite ergänzende Synchronisierungs-Daten $t_{EGS}$ bildet, und die zweiten ergänzenden Synchronisierungs-Daten können an die jeweilige Sensoreinheit SU übermittelt werden, bevorzugt mithilfe des Kennsignals MAC_SYNCF, und die zweiten ergänzenden Synchronisierungs-Daten $t_{EGS}$ können bei der Erfassung der jeweiligen Sensordaten SD durch die jeweilige Sensoreinheit SU berücksichtigt werden.

Die Stromwerte der jeweiligen Sensoreinheit SU können zu aggregierten Stromzeigern $\underline{I_{H1p}}$ aggregiert werden, und die aggregierten Stromzeiger $\underline{I_{H1p}}$ können an die Zentraleinheit CU übertragen werden, und in der Zentraleinheit CU aus den Spannungswerten und den aggregierten Stromzeigern $\underline{I_{H1p}}$ Leistungen berechnet werden.

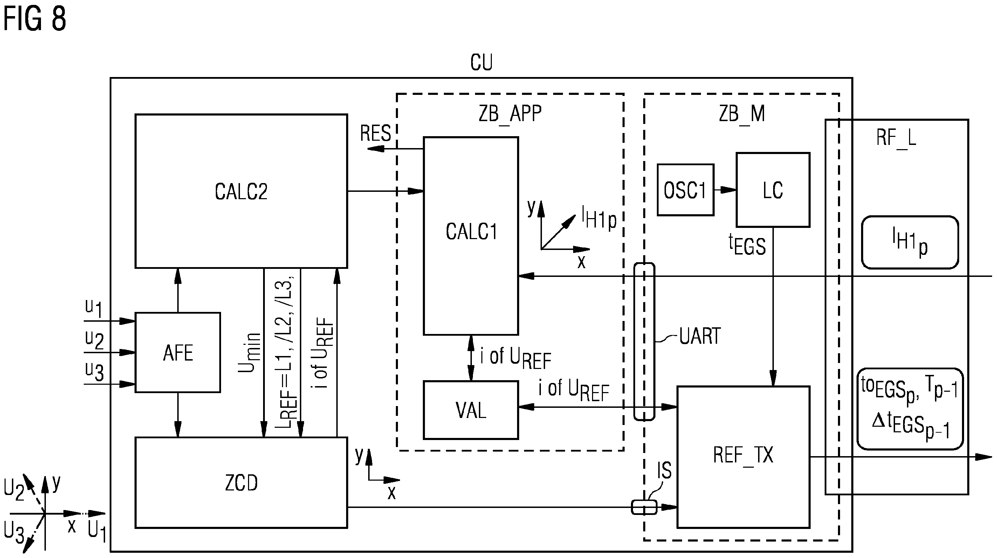

**Fig. 8** zeigt eine Detailansicht der Zentraleinheit CU der Erfindung.

Alle drei angeführten Ausführungsbeispiele können eingesetzt werden, wenn die Zentraleinheit CU und zumindest eine Sensoreinheit SU über drahtgebundene Verbindung direkt oder über mehrere Knoten/Hops kommuniziert, wie beispielsweise bei einer Ethernetbasierten "Daisy-Chain".

Dabei soll die Laufzeitkorrektur auf Seite der jeweiligen Sensoreinheit SU beim Empfang vom SYNC-Frame MAC_SYNCF abhängig von der Position der Sensoreinheit SU in der Daisy-Chain erfolgen.

Die Laufzeitkorrekturwerte werden bevorzugt für jede Sensoreinheit SU in einer periodischen Laufzeitkorrekturwertermittlung oder zu Beginn der Kommunikation bestimmt, also beispielsweise durch das Aussenden von periodischen Laufzeitmess-Frames.

Eine analoge Datenerfassungs-Vorrichtung AFE tastet die Spannungen U2, U2, U3 ab.

Eine Null-Durchgangs-Erkennungs-Vorrichtung ZCD erkennt Null-Durchgänge im zeitlichen Verlauf der Referenzspannung $U_{REF_H1}$ und zählt die Spannungs-Zyklen der jeweiligen Spannung.

Das Hochfrequenz-Modul RF_M kann beispielsweise durch ein "Zigbee"-Modul ZB_M und eine "Zigbee"-Anwendung ZB_APP gebildet sein, wobei Letztere Ergebnisse RES für Strom, Spannung, Leistung liefert.

Eine Berechnungs-Vorrichtung CALC1 dient zur Berechnung von Wirkleistung P und Blindleistung Q aus entsprechenden Spannungen und Strömen, beziehungsweise aus Spannungs- und Stromzeigern.

Eine Berechnungs-Vorrichtung CALC2 dient

- zur Berechnung von Spannungs-Werten aus Betrags- und Phasen-Informationen, wobei der Aufzählungspunkt dem letzten, vorhergehenden Aufzählungspunkt entspricht,

- zur Bereitstellung der in der Null-Durchgangs-Erkennungs-Vorrichtung ZCD gezählten Messperioden einer Referenzspannung $U_{REF_H1}$,
- zur Bestimmung einer Referenz-Linie LREF von Netzphasen-Leitern L1, L2, L3 des Energieversorgungs-Netzes,
- zur Bestimmung einer Minimal-Spannung $U_{MIN}$, unter der die Spannungsnullpunktdurchgänge nicht bestimmt bzw. gezählt werden, um eine Fehleranfälligkeit zu verbessern,
- eine optionale Bestimmung einer Phasen-Abfolge von Netz-Spannungen u1, u2, u3 in Form von Spannungs-Zeigern U1, U2, U3 der Netz-Spannung,
- eine Bestimmung von Spannungs-Zeigern U1, U2, U3 aus den Netz-Spannungen u1, u2, u3.

Die Berechnungen der Berechnungs-Vorrichtung CALC2 werden periodisch über Messzyklen durch eine entsprechende Validierungs-Vorrichtung VAL geprüft, insbesondere hinsichtlich Übereinstimmung der Spannungs- und Stromperioden-Nummerierungen.

Die Daten der Vorrichtung zur Referenz-Phasen-Übertragung PHU wird mithilfe des Senders beziehungsweise Empfängers UART in der Zentraleinheit CU an ein Hochfrequenz-Modul RF_M entsprechend verteilt.

Ein Interrupt-Signal IS für Null-Durchgang in der Referenzspannung $U_{REF_H1}$ wird einem Referenz-Signal-Sender REF_TX innerhalb des Hochfrequenz-Moduls RF_M bereitgestellt, welcher wiederum eine Information bezüglich des Nullpunktdurchgangs der Referenzspannung $t0_{EGS}$ und einer Zeit-Verzögerung beim Aussenden von Sync-Frames MAC_SNCF $\Delta t_{EGS}$ von einem zentralen Oszillator OSC1 und einer anführende Zähler-Vorrichtung LC erhält.

Mit der Minimal-Spannung $U_{MIN}$ kann sichergestellt werden, dass nur eine minimal zulässige Spannung in der nachfolgenden Auswertung zur Leistungsberechnung berücksichtigt wird, um eine Fehleranfälligkeit zu verbessern.

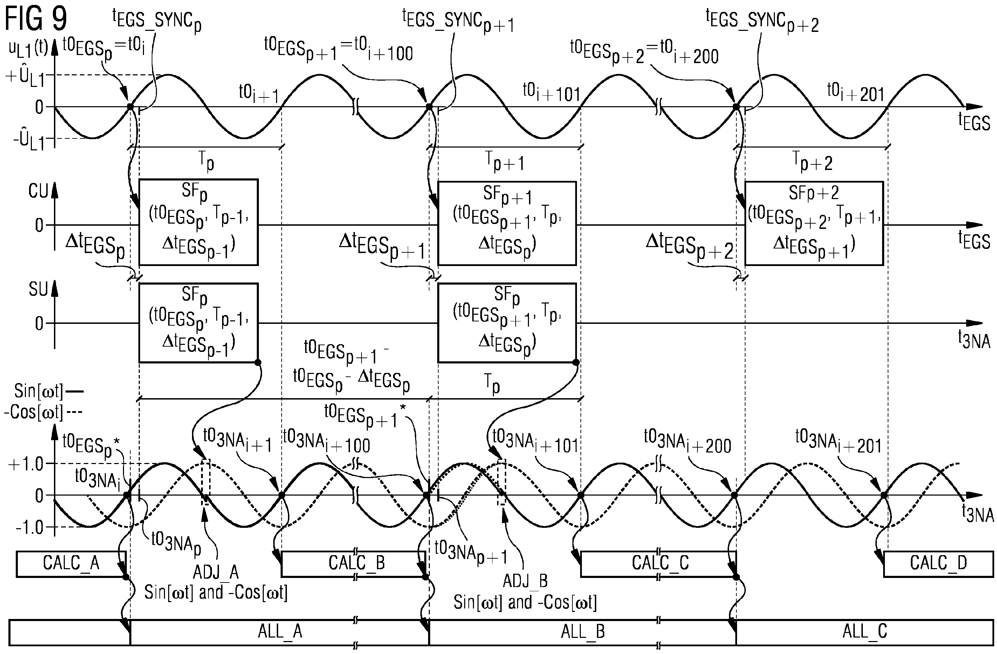

Fig. 9 zeigt ein Beispiel für einen Signalverlauf im Energieverteilungsnetz, wobei der zeitliche Ablauf der Datenerfassung der Sensordaten SD gezeigt ist.

Die zeitlichen Bereiche ALL_A, ALL_B, ALL_C zeigen die Übertragungen aller Sensoreinheiten SU der jeweiligen Ströme für die Messperioden p-1, p, p+1, p+2 an die Zentraleinheit CU.

Die zeitlichen Bereiche CALC _A, CALC _B, CALC _C, CALC _D zeigen die jeweiligen Berechnungen der aggregierten Ströme für die Messperioden p-1, p, p+1, p+2 in der Sensoreinheit SU.

Die zeitlichen Bereiche ADJ_A, ADJ_B zeigen die Justierungen der Zeiteinheiten der jeweiligen Sensoreinheiten SU aus den Synchronisationsdaten der jeweiligen SYNC-Frames $SF_{p-1}$, $SF_p$, $SF_{p+1}$, $SF_{p+2}$, welche allgemein als SYNC-Frame MAC_SYNCF bezeichnet werden.

Das SYNC-Frame $SF_{p-1}$ ist in der Figur nicht dargestellt.

Unabhängig vom grammatikalischen Geschlecht eines bestimmten Begriffes sind Personen mit männlicher, weiblicher oder anderer Geschlechteridentität mit umfasst.

Bezugszeichenliste

| | |
|---|---|
| $\alpha_1, \alpha_2, \alpha_3$ | Winkel zwischen Phasenspannungs-Zeigern $\underline{U}_1$, $\underline{U}_2$, und $\underline{U}_3$ |
| ADJ_A, ADJ_B | Vorgänge zur Justierung von Zeiteinheiten |
| AFE | analoge Datenerfassungs-Vorrichtung (engl. "analog frontend") |
| AGG | Aggregations-Vorrichtung |
| ALL_A, ALL_B, ALL_C | Vorgänge zur Übertragung von Strom-Informationen |
| CALC_A, CALC_B, CALC_C, CALC_D | Vorgänge zur Berechnung der aggregierten Ströme |
| CU | Zentrale Kontroll-Vorrichtung |
| $\Delta t_{EGSP-1}$, $\Delta t_{EGSP}$ | Wert der Zeit-Verzögerung im Messzyklus p-1 bzw. p |
| DCOMP | Kompensations-Vorrichtung für Zeit-Verzögerung in der Hochfrequenz-Übertragungsstrecke |
| FC | interne Zähler-Vorrichtung einer Sensor-Vorrichtung, folgende Zähler-Vorrichtung (engl. "follower clock") |
| i, k | Perioden-Nummer |
| I | Strom |
| $\underline{I}_{H1}$ | Komplexer Stromzeiger |
| $\underline{I}_{H1_p}$ | (aggregierter) komplexer Stromzeiger |
| IS | Interrupt-Signal für Null-Durchgang der Referenz-Spannung |
| L1, L2, L3 | Netzphasen-Leiter |
| $L_{REF}$ | Referenz-Leiter |
| LC | anführende Zähler-Vorrichtung (engl. "leader clock") |
| LV | Niederspannungs-Bereich |

| | |
|---|---|
| MAC_SYNCF, $SF_{p-1}$, $SF_p$, $SF_{p+1}$, $SF_{p+2}$, | Synchronisations-Rahmen mittels MAC-Layer-basiertem "Multicast" von Synchronisations-Rahmen |
| N1, N2 | Netzwerk |
| NC1, NC2 | Netzwerk-Kontroll-Vorrichtung |
| OSC1, OSC2 | Oszillator |
| p | Messperiode |
| $\varphi_1$, $\varphi_2$, $\varphi_3$ | Phasenlage zwischen Strom und Spannung in Phasenleitung |
| Pp | (Aggregierte) Wirkleistung innerhalb einer Messperiode p |
| PHU | Vorrichtung zur Referenz-Phasen-Übertragung |
| Qp | (Aggregierte) Blindleistung innerhalb einer Messperiode p |
| REF_TX | Referenz-Signal-Sender |
| RES | Ergebnisse für Strom, Spannung, Leistung |
| RF_L | Hochfrequenz-Übertragungsstrecke (engl. "radio frequency link") |
| RF_M | Hochfrequenz-Modul |
| SD | Sensor-Daten, wie Strom-Zeiger $I_{H1p}$ für Wechselstromwerte des Primär-Stroms ($x_n$) |
| SU | lokale Kontroll-Vorrichtung, Sensor-Vorrichtung |
| $t0_{EGS_p}$ | Nullpunkt-Durchgangs-Zeitpunkt in der zentralen Kontroll-Vorrichtung |
| $t0_{EGS_{p-1}}$ | Nullpunkt-Durchgangs-Zeitpunkt in der vorhergehenden Messperiode p-1 |
| $t_{3NA}$ | Zählerwert der lokal ermittelte Netzspannungs-Periodendauer in der lokalen Kontroll-Vorrichtung |
| $t_{EGS}$ | Zeit, welche durch den Zähler LC bereitgestellt wird |
| $T_p$ | aktuelle Periodendauer der Netzspannung |
| TR | Transformatoren |
| u1, u2, u3 | Zeitverläufe der Netz-Spannungen an der Eingängen u1, u2, u3 der Zentraleinheit |
| $\underline{U1}$, $\underline{U2}$, $\underline{U3}$ | Spannungs-Zeiger der Netz-Spannung |
| $U_{MIN}$ | Minimal-Beträge der Spannungen u1, u2 bzw. u3 |
| $U_{REF}$ | Referenz-Spannung |
| UART | Sender/Empfänger (engl. "Universal Asynchronous Receiver Transmitter") |
| UC_D | "Unicast"-Datenübertragung |
| VAL | periodische Validierung eines Messzyklus |
| x, y | Koordinaten-Achsen |
| ZB_APP | Zigbee-Anwendung |
| ZB_M | Zigbee-Modul |
| ZCD | Null-Durchgangs-Erkennung (engl. "zero crossing detection") |

**Patentansprüche**

**1.** Verfahren zur Zeitsynchronisation von Sensoreinheiten (SU) in einem verteilten System,

wobei die Sensoreinheiten (SU) jeweils eine interne Zeiteinheit (FC) aufweisen, und
wobei von den Sensoreinheiten (SU) Sensordaten (SD) erfasst und über ein Funknetz (RFN) an eine Zentraleinheit (CU) übermittelt werden, und
wobei im Funknetz (RFN) in regelmäßigen, zeitlichen Abständen ein Kennsignal (MAC_SYNCF) ausgesendet wird,
dass ein Empfang des Kennsignals (MAC_SYNCF) in einer jeweiligen Sensoreinheit (SU) überwacht wird,
dass bei Empfang eines charakteristischen Zeitmerkmal des Kennsignals (MAC_SYNCF) jeweils ein aktueller Wert der internen Zeiteinheit (FC) der jeweiligen Sensoreinheit (SU) mit zumindest einer im Kennsignal enthaltene Senderidentifikation gespeichert wird,
dass bei Erfassen von Sensordaten (SD) ein weiterer, aktueller Wert der internen Zeiteinheit (FC) der jeweiligen Sensoreinheit (SU) gespeichert wird,
dass den erfassten Sensordaten (SD) zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordaten (SD) gespeicherte Wert der internen Zeiteinheit (FC) zugeordnet werden und gemeinsam mit den Sensordaten (SD) an die Zentraleinheit (CU) übertragen werden, und
dass anhand der Senderidentifikation eine Bezugszeitbasis und anhand des bei Empfang des charakteristischen Zeitmerkmals des Kennsignals gespeicherten Werts der internen Zeiteinheit (FC) der jeweiligen Sensoreinheit

(SU) und des beim Erfassen der Sensordaten (SD) weiteren, gespeicherte Werts der internen Zeiteinheit (FC) der jeweiligen Sensoreinheit (SU) eine zeitliche Relation der übertragenen Sensordaten (SD) der jeweiligen Sensoreinheit (SU) zur Bezugszeitbasis abgeleitet werden, **dadurch gekennzeichnet, dass**
die Zentraleinheit (CU) Spannungs- und Phasenwerte von zumindest einem der drei Phasenleiter eines Energieversorgungsnetzes als Spannungszeiger und/oder Stromzeiger mehr als eine Grundschwingungs-Periode der Spannung erfasst, und
die Stromzeiger der jeweiligen Sensoreinheit (SU) zu aggregierten Stromzeigern ($\underline{I}_{H1p}$) aggregiert werden, und die aggregierten Stromzeiger ($\underline{I}_{H1p}$) statt der Sensordaten an die Zentraleinheit (CU) übertragen werden, und in der Zentraleinheit (CU) aus den Spannungswerten und den aggregierten Stromzeigern ($\underline{I}_{H1p}$) phasenrichtig Leistungen berechnet werden.

**2.** Verfahren nach Anspruch 1, wobei das Aggregieren der Stromzeiger unter Berücksichtigung deren jeweiligen Beträge unter Einbeziehung der Phasenwerte durch Mittelung innerhalb der Messperiode (p) erfolgt.

**3.** Verfahren nach Anspruch 1, wobei das Aggregieren der Stromzeiger unter Berücksichtigung der jeweiligen internen Zeiteinheit (FC) der jeweiligen Sensoreinheit (SU) durch Mittelung innerrhalb der Messperiode (p) erfolgt.

**4.** Verfahren nach einem der vorhergehenden Ansprüche, wobei das Aggregieren der Stromzeiger ($\underline{I}_{H1p}$) nur jene der Perioden berücksichtigt, bei welchen die Werte für die Stromzeiger innerhalb von vordefinierten Grenzwerten liegen.

**5.** Verfahren nach einem der vorhergehenden Ansprüche, wobei die aggregierten Stromzeiger ($\underline{I}_{H1p}$) von der jeweiligen Sensoreinheit (SU) zur Zentraleinheit (CU) übertragen werden.

**6.** Verfahren nach einem der vorhergehenden Ansprüche, wobei die Stromzeiger über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

**7.** Verfahren nach einem der vorhergehenden Ansprüche, wobei die Zentraleinheit (CU) Spannungs- und Phasenwerte von zumindest einem der drei Phasenleiter eines Energieversorgungsnetzes erfasst, aus welchen Synchronisierungs-Daten ($t0_{EGSp}$, $T_p$) zur Frequenz oder Periodendauer, sowie zur Phasenlage der Spannung zumindest eines der drei Phasenleiter in Bezug auf den Erfassungszeitpunkt der Spannungs- und Phasenwerte des zumindest einen der drei Phasenleiter ermittelt und an die Sensoreinheiten (SU) übermittelt werden, und
die jeweilige Sensoreinheit (SU) die jeweiligen Sensordaten (SD) in Form von Stromwerten in Bezug auf die Synchronisierungs-Daten ($t0_{EGSp}$, $T_p$) erfasst, wobei die Sensordaten (SD) an die Zentraleinheit (CU) übertragen werden, und in der Zentraleinheit (CU) aus den Spannungswerten und Stromwerten Leistungen berechnet werden.

**8.** Verfahren nach einem der vorhergehenden Ansprüche, wobei die Synchronisierungs-Daten ($t0_{EGSp}$) betreffend die Phasenlage der Spannung zumindest eines der drei Phasenleiter in Bezug auf den Erfassungszeitpunkt der Spannungs- und Phasenwerte des zumindest einen der drei Phasenleiter durch den Zeitpunkt der Übermittlung von der Zentraleinheit (CU) an die jeweilige Sensoreinheit (SU) gebildet sind.

**9.** Verfahren nach einem der vorhergehenden Ansprüche, wobei die Synchronisierungs-Daten ($t0_{EGSp}$, $T_p$) mithilfe des Kennsignals (MAC_SYNCF) an die Sensoreinheiten (SU) übermittelt werden.

**10.** Verfahren nach einem der vorhergehenden Ansprüche, wobei die Synchronisierungs-Daten ($t0_{EGS_p}$, $T_p$) über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

**11.** Verfahren nach einem der vorhergehenden Ansprüche, wobei die Zentraleinheit (CU) Spannungs- und Phasenwerte von einem Phasenleiter des Energieversorgungsnetzes und erste ergänzende Synchronisierungs-Daten ($\Delta t_{EGS_{p-1}}$) zur Zeit-Verzögerung bei der Aussendung des Kennsignals (MAC_SYNCF) erfasst, welche in einem vorhergehenden Zeitraum erfasst wurde, welche vor dem aktuellen Zeitraum liegt, in welchem die Synchronisierungs-Daten ($t0_{EGS_p}$, $T_p$) erfasst werden, und die ersten ergänzenden Synchronisierungs-Daten ($\Delta t_{EGS_p}$-1) an die jeweilige Sensoreinheit (SU) übermittelt werden, bevorzugt mithilfe des Kennsignals (MAC_SYNCF), und die ersten ergänzenden Synchronisierungs-Daten ($\Delta t_{EGS_{p-1}}$) bei der Erfassung der jeweiligen Sensordaten (SD) durch die jeweilige Sensoreinheit (SU) berücksichtigt werden.

**12.** Verfahren nach einem der vorhergehenden Ansprüche, wobei die Zentraleinheit (CU) ferner eine interne zentrale Zeiteinheit aufweist, deren Wert zweite ergänzende Synchronisierungs-Daten ($t_{EGS}$) bildet, und die zweiten ergänzenden Synchronisierungs-Daten an die jeweilige Sensoreinheit (SU) übermittelt werden, bevorzugt mithilfe des Kennsignals (MAC_SYNCF), und die zweiten ergänzenden Synchronisierungs-Daten ($t_{EGS}$) bei der Erfassung der jeweiligen Sensordaten (SD) durch die jeweilige Sensoreinheit (SU) berücksichtigt werden.

**13.** Verteiltes System zur Zeitsynchronisation von Sensoreinheiten (SU), umfassend eine Zentraleinheit (CU), wobei das System dazu eingerichtet ist, das Verfahren nach einem der vorhergehenden Ansprüche auszuführen.

FIG 1

U2
y
α2=2/3π
α1=0
U1
x
α3=4/3π
U3

FIG 2

U2
y
I2, U1
I1, U1
φ2
φ1
U1=Uref
α1=0
x
φ3
U3
I3, U1

FIG 3

x
U2=Uref
I2, U2
φ2
α2=2/3π
I1, U2
φ1
U1
φ3
y
U3
I3, U2

FIG 4

TR
NC1
NC2
LV
N1
N2

SU
OSC2
FC
SD
CCALC
AGG
DCOMP
RF_L
MAC_SYNCF
UC_D
CU
RF_M
OSC1
LC
REF_TX
CALC
IS
UART
PHU

FIG 5

FIG 6
SU
OSC2
FC
SD
CCALC
AGG
DCOMP
RF_L
MAC_SYNCF
UC_D
CU
RF_M
LC
OSC1
REF_TX
CALC
IS
UART
PHU
x
y

FIG 7
SU
OSC2
FC
t_EGS*
t_3NA = t_EGS*
SD
CCALC
AGG
DCOMP
x
y
I_H1p
RF_L
t_EGS
MAC_SYNCF
t0_EGSp, T_p-1
UC_D
I_H1p
CU
RF_M
LC
OSC1
t_EGS
REF_TX
CALC
IS
UART
PHU
u1
u2
u3
U1
U2
U3

FIG 8
CU
ZB_APP
ZB_M
RF_L
IH1p
toEGSp, Tp-1
ΔtEGSp-1
OSC1
LC
tEGS
REF_TX
UART
IS
CALC1
VAL
i of UREF
i of UREF
IH1p
y
x
RES
CALC2
AFE
ZCD
i of UREF
LREF=L1,/L2,/L3,
Umin
y
x
u1
u2
u3
U1
U2
U3
y
x

FIG 9
CALC_A
CALC_B
CALC_C
CALC_D
ALL_A
ALL_B
ALL_C
ADJ_A
ADJ_B
Sin[ωt] and -Cos[ωt]
Sin[ωt] and -Cos[ωt]
Sin[ωt]
-Cos[ωt]
CU
SU
+1.0
-1.0
0

Europäisches Patentamt
European Patent Office
Office européen des brevets

# EUROPÄISCHER RECHERCHENBERICHT

Nummer der Anmeldung

EP 24 22 1620

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 993 290 B1 (SIEMENS AG OESTERREICH [AT]) 26. Juni 2024 (2024-06-26)<br>* Absatz [0011] - Absatz [0012] *<br>----- | 1-13 | INV.<br>H04J3/06<br>H04Q9/04<br>H04W56/00<br><br>ADD.<br>H04W4/70 |
| A | US 2012/188997 A1 (ZAKRZEWSKI RADOSLAW ROMUALD [US] ET AL)<br>26. Juli 2012 (2012-07-26)<br>* Absatz [0006] *<br>* Absatz [0009] *<br>* Absatz [0044] - Absatz [0047] *<br>* Absatz [0054] - Absatz [0058] *<br>* Absatz [0064] - Absatz [0067] *<br>* Absatz [0088] - Absatz [0092] *<br>* Absatz [0099] *<br>* Abbildungen 1, 13, 23 *<br>----- | 1-13 | |
| A | EP 2 550 509 B1 (HYDRO QUÉBEC [CA])<br>27. Juli 2016 (2016-07-27)<br>* Absatz [0042] - Absatz [0054]; Abbildungen 2, 3, 4 *<br>----- | 1-13 | |
| | | | RECHERCHIERTE SACHGEBIETE (IPC) |
| A | EP 3 318 057 B1 (BOSCH GMBH ROBERT [DE])<br>16. Juni 2021 (2021-06-16)<br>* ganzes Dokument *<br>----- | 1-13 | H04J<br>H04W<br>H04Q<br>H04L |
| A | US 2013/336205 A1 (ZAKRZEWSKI RADOSLAW R [US] ET AL) 19. Dezember 2013 (2013-12-19)<br>* ganzes Dokument *<br>----- | 1-13 | |

Der vorliegende Recherchenbericht wurde für alle Patentansprüche erstellt

1

| Recherchenort | Abschlußdatum der Recherche | Prüfer |
|---|---|---|
| Den Haag | 16. Mai 2025 | Schmidbauer, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 22 1620

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2025

| Im Recherchenbericht angeführtes Patentdokument | Datum der Veröffentlichung | Mitglied(er) der Patentfamilie | Datum der Veröffentlichung |
|---|---|---|---|
| EP 3993290 B1 | 26-06-2024 | KEINE | |
| US 2012188997 A1 | 26-07-2012 | KEINE | |
| EP 2550509 B1 | 27-07-2016 | AU 2011232283 A1 | 11-10-2012 |
| | | BR 112012024003 A2 | 30-08-2016 |
| | | CA 2699596 A1 | 24-09-2011 |
| | | CA 2792376 A1 | 29-09-2011 |
| | | CN 102859334 A | 02-01-2013 |
| | | EP 2550509 A1 | 30-01-2013 |
| | | ES 2600008 T3 | 06-02-2017 |
| | | PL 2550509 T3 | 31-01-2017 |
| | | US 2013018620 A1 | 17-01-2013 |
| | | WO 2011116479 A1 | 29-09-2011 |
| EP 3318057 B1 | 16-06-2021 | CN 107710753 A | 16-02-2018 |
| | | DE 102015212218 A1 | 05-01-2017 |
| | | EP 3318057 A1 | 09-05-2018 |
| | | US 2018176424 A1 | 21-06-2018 |
| | | WO 2017001069 A1 | 05-01-2017 |
| US 2013336205 A1 | 19-12-2013 | EP 2675224 A1 | 18-12-2013 |
| | | US 2013336205 A1 | 19-12-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3993290 B1